# EUROPEAN PATENT SPECIFICATION

(11) **EP 3 838 417 B1**
(45) Date of publication and mention of the grant of the patent: **26.04.2023**
(21) Application number: 20214170.1
(22) Date of filing: 15.12.2020
(51) Int. Cl.: B05B 5/00

(54) **ISOLATING VALVE**
ISOLIERVENTIL
VANNE D'ISOLEMENT

(30) Priority: 19.12.2019 US 201962950738 P
(43) Date of publication of application: 23.06.2021
(73) Proprietor: Graco Minnesota Inc., Minneapolis, MN 55413 (US)
(72) Inventor: KOEHNE, David W., Blaine, MN 55434 (US); BOSCHERT, Paul F., Minneapolis, MN 55408 (US)
(74) Representative: Miller Sturt Kenyon

(56) References cited:
- JP-A- H09 141 142
- US-A- 4 313 475
- US-A- 5 341 990

## Description

### CROSS-REFERNCE TO REPLATED APPLICATION(S)

This application claims priority to U.S. Provisional Application No. 62/950,738 filed December 19, 2019, and entitled "ISOLATING VALVE,".

### BACKGROUND

This disclosure relates to fluid spraying. More particularly, this disclosure relates to electrical isolation during spraying. An example of a system used for electrostatic coatings is described in US 4,313,475.

Electrostatic sprayers are used to spray a charged liquid, such as paint or water, onto a grounded object. The liquid is atomized as it is ejected from the spray gun and is charged as it moves past an electrode of the spray gun. The charged liquid is attached to the grounded object that the liquid is sprayed onto, thereby providing a more even coating to the object.

Water-based liquids, such as paints, can create a conduction path between the spray gun and the main fluid supply. However, because the main fluid supply is grounded, the spray gun and charged fluid must be isolated from that main fluid supply. As such, the supply tank directly connected to the spray gun must be electrically isolated from the main fluid supply. To refill the supply tank with additional fluid the user shuts down the electrostatic sprayer and discharges any charge prior to accessing the supply tank. The user then refills the supply tank and restarts the spraying system to resume electrostatic spraying.

### SUMMARY

According to one aspect of the disclosure, an isolation valve includes an inlet module, an outlet module, and an actuating module. The inlet module includes a stem extending from a shuttle and including an internal flowpath extending from a first end of the stem connected to the shuttle to a fluid port through the stem; and a sleeve disposed around the stem and movable relative to the stem. The fluid port is disposed within the sleeve with the inlet module in the isolated state and the fluid port is disposed outside of the sleeve with the inlet module in the connected state. The outlet module includes a piston at least partially disposed within a piston bore through the outlet module. The actuating module is configured to actuate the isolation valve between an isolated state, where the inlet module is spaced from the outlet module such that a gap is disposed between the inlet module and the outlet module, and a connected state, where the inlet module is mechanically and fluidly connected to the outlet module.

According to another aspect of the disclosure, a method includes driving an isolation valve in a first direction from an isolated state, where an inlet module is spaced from an outlet module such that a gap is formed therebetween, to a first intermediate state, where contact is made between a stem of the inlet module and a piston of the outlet module; driving the isolation valve in the first direction from the first intermediate state to a second intermediate state, where contact is made between a sleeve through which the stem extends and the outlet module such that the sleeve is braced against the outlet module to prevent further movement of the sleeve in the first direction; driving the isolation valve in the first direction from the second intermediate state to a connected state, wherein the stem shifts relative to the piston as the isolation valve transitions to the connected state such that a fluid port through the stem is uncovered within the outlet module thereby opening a flowpath through the stem between an inlet port of the inlet module and an outlet port of the outlet module; and driving the isolation valve from the connected state to the second intermediate state, from the second intermediate state to the first intermediate state, and from the first intermediate state to the isolated state.

### BRIEF DESCRIPTION OF THE DRAWINGS

FIG. 1A is a schematic block diagram of an electrostatic spray system in a first state.
FIG. 1B is a schematic block diagram of an electrostatic spray system in a second state.
FIG. 2A is an isometric view of a first isolation valve in an isolated state.
FIG. 2B is an isometric view of the first isolation valve in a connected state.
FIG. 2C is an exploded view of the first isolation valve.
FIG. 3A is a cross-sectional view of the first isolation valve in the isolated state.
FIG. 3B is a cross-sectional view of the first isolation valve in a first intermediate state.
FIG. 3C is a cross-sectional view of the first isolation valve in a second intermediate state.
FIG. 3D is a cross-sectional view of the first isolation valve in the connected state.
FIG. 4 is an enlarged view of a first interface between a sleeve, a stem, and a piston of an isolation valve.
FIG. 5 is an enlarged view of a second interface between a sleeve, a stem, and a piston of an isolation valve.
FIG. 6A is a cross-sectional view of the first isolation valve showing an inlet wash path.
FIG. 6B is a cross-sectional view of the first isolation valve showing an outlet wash path.
FIG. 7A is a cross-sectional view of a second isolation valve in the isolated state.
FIG. 7B is a cross-sectional view of the second isolation valve in a first intermediate state.
FIG.7C is a cross-sectional view of the second isolation valve in a second intermediate state.
FIG. 7D is a cross-sectional view of the second isolation valve in the connected state.
FIG. 8 is an enlarged view of detail 8 in FIG. 7B showing a third interface between a sleeve, a stem, and a piston of an isolation valve.

### DETAILED DESCRIPTION

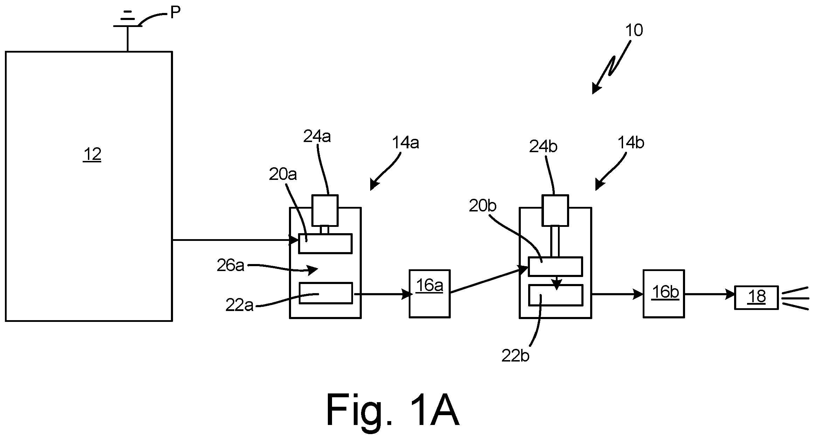

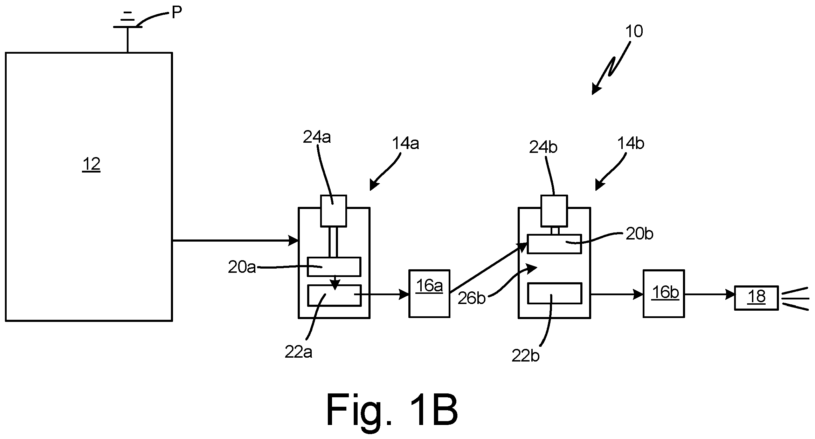

FIG. 1A is a schematic block diagram of electrostatic spray system 10 in a first state. FIG. 1B is a schematic block diagram of electrostatic spray system 10 in a second state. FIGS. 1A and 1B will be discussed together. Electrostatic spray system 10 includes main reservoir 12; isolation valves 14a, 14b; pumps 16a, 16b; and applicator 18. Isolation valves 14a, 14b include, respectively, inlet modules 20a, 20b; outlet modules 22a, 22b; and actuating modules 24a, 24b.

Electrostatic spray system 10 is configured to atomize and spray a liquid, such as water and water-based coatings, and charge the liquid droplets to a desired potential. For example, electrostatic spray system 10 can be configured to spray with a charge in the range of 50-120 kilovolts (kV). More specifically, electrostatic spray system can be configured to spray with a charge in the range of 60-100kV. It is understood, however, that electrostatic spray system 10 can be configured to spray at any desired charge. Isolation valves 14a, 14b can be sized to provide electrical isolation between charged components and earth ground potential P regardless of the charge. The charged droplets are directed towards an object to coat the object with the droplets. Electrostatic spray system 10 provides a continuous supply of the liquid to applicator 18 for application while isolating the liquid in main reservoir 12 from the liquid being sprayed to prevent shorting to earth ground.

Main reservoir 12 stores a supply of spray fluid for application on a substrate by applicator 18, which can be an electrostatic spay gun of any desired configuration, either manual or automatic. Main reservoir 12 is electrically connected to earth ground potential P throughout operation. Applicator 18 must be electrically isolated from earth ground potential P to prevent shorting. Isolation valves 14a, 14b facilitate electrical isolation while still allowing electrostatic spray system 10 to provide a continuous supply of spray fluid for use at applicator 18. As such, the user does not need to turn off electrostatic spray system 10 to refill with liquid from main reservoir 12.

Isolation valve 14a is disposed downstream of main reservoir 12. Inlet module 20 of isolation valve 14a is fluidly connected to main reservoir 12 to receive fluid from main reservoir 12. Inlet module 20a of isolation valve 14a is electrically connected to earth ground potential P due to the conductive nature of the spray liquid.

Actuating module 24a is connected to inlet module 20a and configured to drive inlet module 20a between an isolated state, shown in FIG. 1A, and a connected state, shown in FIG. 1B. For example, actuating module 24a can include an air cylinder and a shaft driven by a piston disposed in the air cylinder. Compressed air can be provided to the air cylinder to drive the piston, thereby driving the shaft, which is connected to inlet module 20a to drive inlet module 20a.

Outlet module 22a is configured to connect with inlet module 20a to receive fluid from inlet module 20a with isolation valve 14a in the connected state. Outlet module 22a is spaced from inlet module 20a such that gap 26a is formed between inlet module 20a and outlet module 22a with isolation valve 14a in the isolated state. Gap 26a electrically isolates inlet module 20a and outlet module 22a.

Pump 16a is disposed downstream of isolation valve 14a and upstream of isolation valve 14b. Pump 16a is fluidly connected to outlet module 22a to receive spray fluid from isolation valve 14a. Pump 16a is fluidly connected to inlet module 20b to provide spray fluid to inlet module 20b. Pump 16a is configured to store a supply of spray fluid and to drive the spray fluid downstream through isolation valve 14b and pump 16b to applicator 18. For example, pump 16a can be a one-way positive displacement pump that includes both a chamber for holding a supply of spray fluid and an actuator, such as a piston, for driving the spray fluid downstream. In some examples, pump 16a is powered, such as pneumatically, among other options, to drive the spray fluid downstream out of pump 16a. Pump 16a can be refilled by the upstream fluid pressure driving fluid into pump 16a. Alternatively pump 16a can be actively driven through a suction stroke.

Isolation valve 14b is substantially similar to isolation valve 14a. In some examples, isolation valves 14a, 14b are identical. Isolation valve 14b is disposed downstream of pump 16a and upstream of pump 16b. Inlet module 20b of isolation valve 14b is fluidly connected to pump 16a to receive fluid from pump 16a. Inlet module 20b of isolation valve 14b is electrically isolated from earth ground potential P due to gap 26a with electrostatic spray system 10 in the state shown in FIG. 1A. Inlet module 20b is electrically connected to earth ground potential P with electrostatic spray system 10 in the state shown in FIG. 1B due to the conductive nature of the spray fluid.

Actuating module 24b is connected to inlet module 20b and configured to drive inlet module 20b between an isolated state, shown in FIG. 1B, and a connected state, shown in FIG. 1A. For example, actuating module 24b can include an air cylinder and a shaft driven by a piston disposed in the air cylinder. Compressed air can be provided to the air cylinder to drive the piston, thereby driving the shaft, which is connected to inlet module 20b to drive inlet module 20b. In some examples, actuating module 24b is electrically grounded throughout operation. To prevent shorting, inlet module 20b is electrically isolated from the grounded actuating module 24b. For example, the shaft or other components extending between and connecting actuating module 24b and inlet module 20b can be formed from a non-conductive material. In other examples, actuating module 24b is electrically isolated from earth ground potential P, such as by mounting isolation valve 14b in a non-conductive enclosure.

Outlet module 22b is configured to connect with inlet module 20b to receive fluid from inlet module 20b with isolation valve 14b in the connected state. In the isolated state, outlet module 22b is spaced from inlet module 20b such that gap 26b is formed between inlet module 20b and outlet module 22b. Gap 26b electrically isolates inlet module 20b and outlet module 22b. Outlet module 22b is electrically connected to applicator 18 throughout operation, such that outlet module 22b is charged whenever applicator 18 is charged. Gap 26b electrically isolates outlet module 22b from earth ground potential P throughout operation.

Pump 16b is disposed downstream of isolation valve 14b and is fluidly connected to outlet module 22b to receive spray fluid from isolation valve 14b. Pump 16b is fluidly connected to outlet module 22b to receive spray fluid from isolation valve 14b. Pump 16b is fluidly connected to applicator 18 to provide spray fluid to applicator 18. Pump 16b is configured to store a supply of spray fluid and to drive the spray fluid downstream to applicator 18. For example, pump 16b can be a one-way positive displacement pump that includes both a chamber for holding a supply of spray fluid and an actuator, such as a piston, for driving the spray fluid downstream. In some examples, pump 16b is powered, such as pneumatically, among other options, to drive the spray fluid downstream out of pump 16b. Pump 16b can be refilled by the upstream fluid pressure driving fluid into pump 16b. Alternatively pump 16b can be actively driven through a suction stroke.

During operation, electrostatic spray system 10 can provide a continuous supply of conductive spray fluid from main reservoir 12 to applicator 18 while maintaining electrical isolation between charged components and earth ground potential P. For the example discussed, electrostatic spray system 10 is assumed to initially be in the state shown in FIG. 1A. Isolation valve 14a is in the isolated position, such that inlet module 20a is electrically isolated from outlet module 22a. Isolation valve 14b is in the connected position, such that inlet module 20a is electrically and fluidly connected to outlet module 22b.

The user activates applicator 18, such as by depressing a trigger of a spray gun forming applicator 18. Pump 16a is activated and drives spray fluid downstream through isolation valve 14b and pump 16b and to applicator 18. The spray fluid is ejected from applicator 18 as a fluid spray. Because applicator 18 is charged, each component fluidly connected to applicator 18 is also charged due to the conductive nature of the spray fluid. The charged components are isolated from earth ground potential P by gap 26a formed between inlet module 20a and outlet module 22a.

The fluid level in pump 16a continues to drop until the fluid level reaches a refill level. For example, a sensor can be associated with pump 16a to determine the amount of fluid remaining in pump 16a. The sensor can be of any type suitable for sensing the fluid in pump 16a while maintaining electrical isolation of pump 16a. For example, the sensor can be an ultrasonic level sensor, fiber optical level sensor, scale configured to weigh pump 16a, float in the chamber of pump 16a, or be of any other configuration suitable for sensing the fluid remaining in pump 16a.

When the fluid level in pump 16a reaches the refill level, electrostatic spray system 10 actuates to the state shown in FIG. 1B. For example, a system controller can activate pump 16b and isolation valve 14b such that pump 16b actively drives spray fluid to applicator 18 and isolation valve 14b transitions from the connected state to the isolated state. Actuating module 24b pulls inlet module 20b away from and out of connection with outlet module 22b, thereby creating gap 26b between inlet module 20b and outlet module 22b. Gap 26b electrically isolates inlet module 20b from outlet module 22b such that the components upstream of gap 26b are electrically isolated from applicator 18 while the components downstream of gap 26b are charged. With gap 26b formed, each of isolation valve 14a and isolation valve 14b are in the isolated state.

Isolation valve 14a is then actuated from the isolated state to the connected state. Actuating module 24a drives inlet module 20a into connection with outlet module 22a, eliminating gap 26a from between inlet module 20a and outlet module 22a. With isolation valve 14a in the connected state, a fluid flowpath is created through isolation valve 14a between main reservoir 12 and pump 16a. The spray fluid flows from main reservoir 12, through inlet module 20a, through outlet module 22a, and to pump 16a. The spray fluid refills pump 16a. The spray fluid can be driven to pump 16a in any desired manner. For example, a pump can be disposed upstream of isolation valve 14a, a pressure within main reservoir 12 can drive the fluid to pump 16a, and/or pump 16a can be actively controlled to draw spray fluid into pump 16a.

With pump 16a refilled, isolation valve 14a is transitioned back to the isolated state from the connected state. Actuating module 24a pulls inlet module 20a out of connection with outlet module 22a. Gap 26a is reformed between inlet module 20a and outlet module 22a, electrically isolating outlet module 22a from earth ground potential P. At this point, each of isolation valve 14a and isolation valve 14b are in the isolated state.

With gap 26a reformed, isolation valve 14b is actuated from the isolated state to the connected state. Actuating module 24b drives inlet module 20b into connection with outlet module 22b, thereby eliminating gap 26b. A flowpath is thereby created through isolation valve 14b. Pump 16a is activated and begins driving the spray fluid downstream through isolation valve 14b and pump 16b and to applicator 18. The spray fluid refills pump 16b as the spray fluid flow through pump 16b, such that pump 16b is primed to provide spray fluid to applicator 18 during the next refill cycle of pump 16a.

Electrostatic spray system 10 can thereby provide a continuous supply of spray fluid from an electrically grounded main reservoir 12 to an electrically charged applicator 18 while maintaining electrical isolation between any grounded components and any charged components. While electrostatic spray system 10 is described as a continuous supply system, it is understood that isolation valve 14a, 14b can provide electrical isolation in systems including only a single isolation valve 14a, 14b. In such a system, isolation valve 14a, 14b is placed in the connected state only when applicator 18 is discharged.

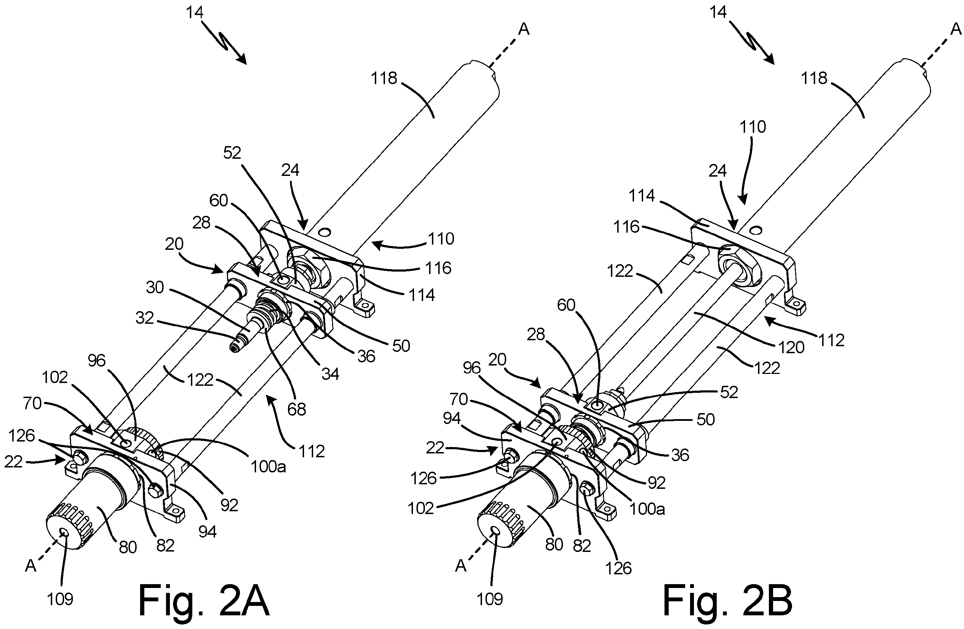

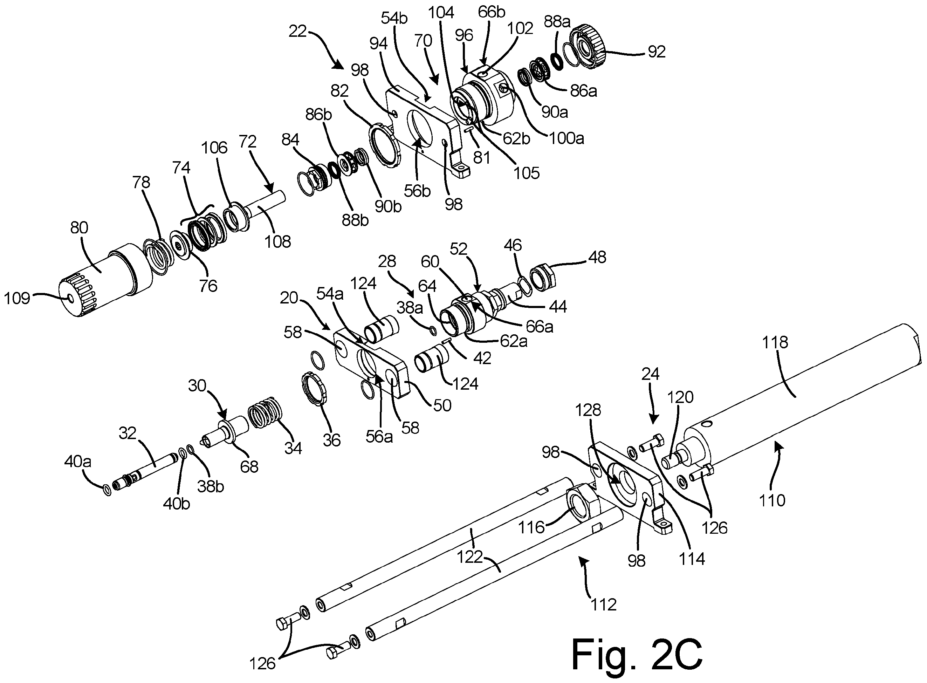

FIG. 2A is an isometric view of isolation valve 14 in an isolated state. FIG. 2B is an isometric view of isolation valve 14 in a connected state. FIG. 2C is an exploded view of isolation valve 14. FIGS. 2A-2C will be discussed together. Isolation valve 14 includes inlet module 20, outlet module 22, and actuating module 24.

Inlet module 20 includes shuttle 28; sleeve 30; stem 32; inlet spring 34; shuttle lock nut 36; inner seals 38a, 38b (FIG. 2C); valve seals 40a, 40b (FIG. 2C); alignment pin 42 (FIG. 2C); floating connector 44 (FIG. 2C); washer 46 (FIG. 2C); and retaining nut 48 (FIG. 2C). Shuttle 28 includes shuttle block 50 and shuttle housing 52. Shuttle block 50 includes slot 54a (FIG. 2C), housing bore 56a (FIG. 2C), and rail bores 58 (FIG. 2C). Shuttle housing 52 includes inlet port 60, pin slot 62a (FIG. 2C), shuttle bore 64 (FIG. 2C), and alignment feature 66a (FIG. 2C). Sleeve 30 includes sleeve flange 68.

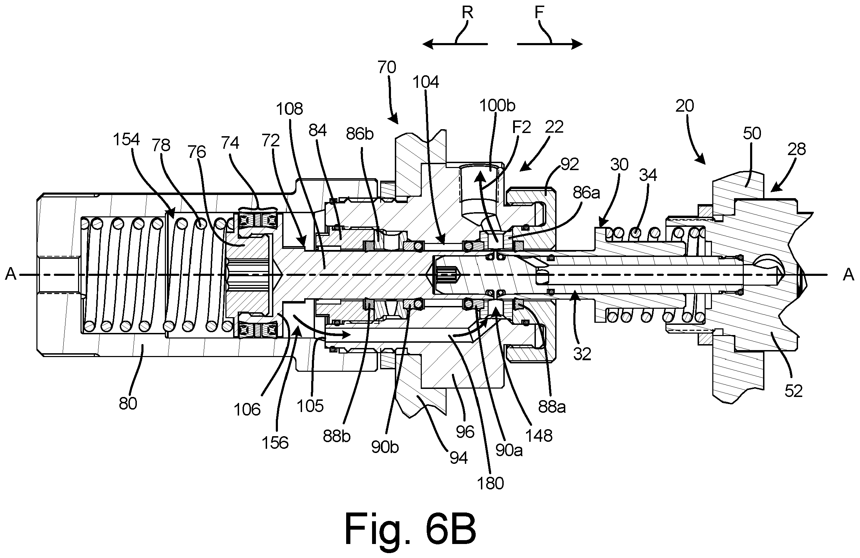

Outlet module 22 includes base 70; piston 72 (FIG. 2C); piston seals 74 (FIG. 2C); piston seal retainer 76 (FIG. 2C); piston spring 78 (FIG. 2C); piston housing 80; alignment pin 81 (FIG. 2C); base lock nut 82; seal retainer 84 (FIG. 2C); cartridge rings 86a, 86b (FIG. 2C); wiper seals 88a, 88b (FIG. 2C); chamber seals 90a, 90b (FIG. 2C); and end cap 92. Base 70 includes outlet block 94 and outlet housing 96. Outlet block 94 includes slot 54b (FIG. 2C), housing bore 56b (FIG. 2C), and rail bores 98 (FIG. 2C). Outlet housing 96 includes pin slot 62b (FIG. 2C); alignment feature 66b (FIG. 2C); wash ports 100a, 100b (wash port 100b shown in FIG. 6B); outlet port 102; piston bore 104 (FIG. 2C); and housing ports 105 (FIG. 2C). Piston 72 includes piston head 106 (FIG. 2C) and piston shaft 108 (FIG. 2C). Piston housing 80 includes boost port 109.

Actuating module 24 includes drive assembly 110, alignment assembly 112, drive block 114, and drive lock nut 116. Drive assembly 110 includes cylinder 118 and drive piston 120. Alignment assembly 112 includes guide rails 122, bearings 124 (FIG. 2C), and fasteners 126. Drive block 114 includes rail bores 98 (FIG. 2C) and central bore 128 (FIG. 2C).

Isolation valve 14 is substantially similar to isolation valves 14a, 14b (FIGS. 1A and 1B) and is configured for use in a spray system, such as electrostatic spray system 10 (FIGS. 1A and 1B). It is understood, however, that isolation valve 14 can be utilized in any application where electrical, mechanical, and/or fluid isolation between an inlet and outlet of a valve is desired.

Actuating module 24 is connected to inlet module 20 to actuate inlet module 20 between an isolated state (FIG. 2A) and a connected sate (FIG. 2B). In the isolated state, gap 26 is formed between inlet module 20 and outlet module 22 such that inlet module 20 is electrically, mechanically, and fluidly isolated from outlet module 22. In the connected state, inlet module 20 is electrically, mechanically, and fluidly connected to outlet module 22.

Drive assembly 110 is attached to inlet module 20. Drive assembly 110 drives inlet module 20 between the isolated and connected states. Cylinder 118 is mounted to drive block 114. Drive piston 120 extends from cylinder 118 through central bore 128 in drive block 114 and towards outlet module 22. Drive lock nut 116 secures cylinder 118 to drive block 114. Cylinder 118 includes an internal piston connected to drive piston 120. Motive fluid, such as compressed air, is provided to cylinder 118 to actuate drive piston 120. While drive assembly 110 is described as including a pneumatic actuator, it is understood that drive assembly 110 can include an actuator of any desired type, such as an electric actuator or a hydraulic actuator, among other options. As such, drive assembly 110 can include any sort of two-way drive for actuating inlet module 20. Drive piston 120 can be formed from any desired material, such as metal, plastic, or ceramic, among other options. In some examples, drive piston 120 is formed from a non-conductive material to prevent shorting while isolation valve 14 is in the connected state. For example, isolation valve 14 is charged when in the connected state in examples where isolation valve 14 is functioning as isolation valve 14b in electrostatic spray system 10. Drive piston 120 being formed from a non-conductive material prevents a conduction path from forming between inlet module 20 and cylinder 118.

Alignment assembly 112 extends between drive assembly 110 and outlet module 22. Alignment assembly 112 is configured to maintain alignment of inlet module on valve axis A-A as inlet module 20 transitions between the isolated and connected states. More specifically, inlet module 20 is guided to ensure concentricity between stem 32 and piston 72 as inlet module 20 engages with outlet module 22. Guide rails 122 extend between rail bores 98 in drive block 114 and outlet block 94. Fasteners 126 extend through rail bores 98 and into guide rails 122 to secure guide rails 122 to drive block 114 and outlet block 94. Guide rails 122 are formed from non-conductive material to ensure that inlet module 20 is electrically disconnected from outlet module 22 in the isolated state. Shuttle block 50 rides on guide rails 122 via bearings 124. Bearings 124 are disposed in rail bores 58 of shuttle block 50. While alignment assembly 112 is described as including guide rails 122, it is understood that alignment assembly 112 can include a guide of any type suitable for maintaining concentricity. For example, the guide can be a single rail on which shuttle block 50 rides, among other configurations. In other examples, inlet module 20 can be free-floating such that isolation valve 14 does not include an alignment assembly 112.

Inlet module 20 receives spray fluid from an upstream location via inlet port 60. Shuttle 28 is connected to drive piston 120 to be driven by drive piston 120 and is mounted on guide rails 122. Shuttle housing 52 is mounted to shuttle block 50 to slide with shuttle block 50. Shuttle housing 52 extends through housing bore 56a in shuttle block 50. A first portion of shuttle housing 52 is disposed on a first side of shuttle block 50 that faces outlet module 22. A second portion of shuttle housing 52 is disposed on a second side of shuttle block 50 that faces actuating module 24. While shuttle housing 52 is described as separately formed from shuttle block 50, it is understood that shuttle housing 52 and shuttle block 50 can be integrally formed as a single part or from more than two parts. Separately forming shuttle housing 52 and shuttle block 50 allows shuttle housing 52 and shuttle block 50 to be formed from different materials, providing a cost savings. For example, shuttle block 50 can be formed from aluminum and shuttle housing 52 can be formed from stainless steel.

Floating connector 44 is disposed in the second portion of shuttle housing 52. Retaining nut 48 is attached to the second portion of shuttle housing 52 and retains floating connector 44 within shuttle housing 52. Washer 46 is disposed between the flange of floating connector 44 and retaining nut 48. While washer 46 is shown as a wave washer, it is understood that washer 46 can be of any type suitable for interfacing between the flange of floating connector 44 and retaining nut 48. Drive piston 120 extends through retaining nut 48 and washer 46 and is connected to floating connector 44. Drive piston 120 drives inlet module 20 via connection with floating connector 44.

Shuttle lock nut 36 interfaces with the first portion of shuttle housing 52 extending through shuttle block 50. Shuttle lock nut 36 secures shuttle housing 52 to shuttle block 50. For example, shuttle lock nut 36 can include internal threading configured to interface with external threading on the first portion of shuttle housing 52. While shuttle lock nut 36 and shuttle housing 52 are described as including interfaced threading, it is understood that shuttle lock nut 36 can lock with shuttle housing 52 in any desired manner. For example, shuttle lock nut 36 can interface with shuttle housing 52 by a bayonet connection, among other options.

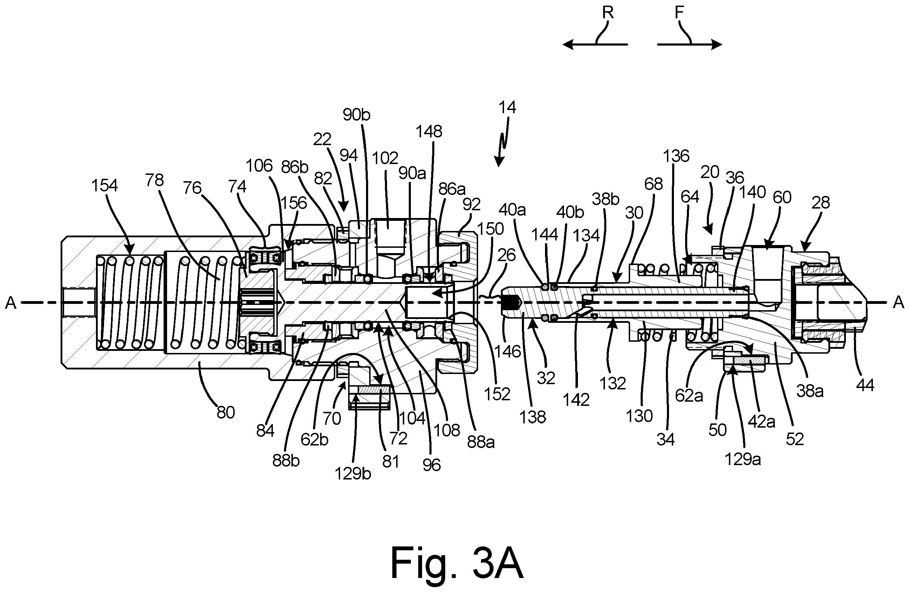

Alignment feature 66a is formed as a portion of shuttle housing 52. Alignment feature 66a interfaces with slot 54a to properly align shuttle housing 52 relative to shuttle block 50. Alignment pin 42 extends between shuttle block 50 and shuttle housing 52 to further maintain alignment between shuttle block 50 and shuttle housing 52. Pin slot 62a is formed in shuttle housing 52. Alignment pin 42 is disposed in a receiving hole (shown in FIGS. 3A-3D) in shuttle block 50 and received by pin slot 62a.

In the example shown, alignment feature 66a is D-shaped with the flat portion positioned in slot 54. It is understood, however, that alignment feature 66a and slot 54a can be of any mating configuration suitable for locking shuttle housing 52 relative to shuttle block 50. Alignment feature 66a can be integrally formed with shuttle housing 52, as shown, or can be separately formed, similar to alignment pin 42.

Inlet port 60 extends into shuttle housing 52 through the flat portion of alignment feature 66. A supply line is connected to inlet port 60 to provide fluid to isolation valve 14. For example, the supply line can extend from a reservoir, similar to main reservoir 12, or from a pump, similar to pump 16a. A flowpath extends through shuttle housing 52 from inlet module 20 to an outlet port disposed in shuttle bore 64.

Inlet spring 34, sleeve 30, and stem 32 are disposed concentrically and coaxially. Sleeve 30 is at least partially disposed within shuttle bore 64. Inlet spring 34 extends around sleeve 30 and is at least partially disposed within shuttle bore 64. Inlet spring 34 interfaces with shuttle housing 52 and sleeve flange 68 to bias sleeve 30 away from shuttle housing 52.

Stem 32 extends through sleeve 30 into shuttle bore 64. Inner seal 38a is disposed at the interface between stem 32 and shuttle housing 52. Inner seal 38b is disposed about the exterior of stem 32 and is positioned within the bore extending through sleeve 30. The first inner seal 38 provides a seal where stem 32 interfaces with the outlet of the flowpath extending through shuttle housing 52 from inlet port 60. The second inner seal 38 provides a seal between stem 32 and sleeve 30 throughout operation. Inner seal 38b provides a dynamic, sliding seal between stem 32 and sleeve 30 to prevent spray fluid from migrating between stem 32 and sleeve 30. Stem 32 is locked to shuttle housing 52 by interfaced threading between the end of stem 32 extending into shuttle housing 52 and shuttle housing 52. The fluid flows through a flowpath extending axially through stem 32.

Valve seals 40a, 40b are disposed on an exterior of stem 32. As discussed in more detail below, a portion of stem 32-projects radially and is disposed between valve seals 40a, 40b. Valve seals 40a, 40b provide a sealing interface between stem 32 and piston 72 and sleeve 30, respectively. Inlet spring 34 biases sleeve 30 into contact with valve seal 40b.

Outlet module 22 is disposed at an opposite axial end of isolation valve 14 from actuating module 24. In the example shown, outlet module 22 is held in a static location during operation. Base 70 supports and houses various other components of outlet module 22. Outlet block 94 is mounted to guide rails 122 by fasteners 126 extending through rail bores 98. Outlet housing 96 is mounted to outlet block 94 and extends through housing bore 56b. A first portion of outlet housing 96 is disposed on a first side of outlet block 94 that faces inlet module 20. A second portion of outlet housing 96 is disposed on a second side of outlet block 94 opposite the first side. While base 70 is described as being formed from outlet housing 96 and outlet block 94, it is understood that base 70 can be formed from more than two components or formed from a single component. In examples where base 70 is formed from multiple components, the components can be permanently or removably joined. Separately forming outlet housing 96 and outlet block 94 allows outlet housing 96 and outlet block 94 to be formed from different materials, thereby saving costs. For example, outlet block 94 can be formed from aluminum and outlet housing 96 can be formed from stainless steel.

Base lock nut 82 interfaces with the second portion of outlet housing 96 extending through outlet block 94. Base lock nut 82 secures outlet housing 96 to outlet block 94. For example, base lock nut 82 can include internal threading configured to interface with external threading on the second portion of outlet housing 96. While base lock nut 82 and outlet housing 96 are described as including interfaced threading, it is understood that base lock nut 82 can lock with outlet housing 96 in any desired manner. For example, base lock nut 82 can interface with outlet housing 96 by a bayonet connection, among other options. In some examples, both base lock nut 82 and piston housing 80 are threaded onto the same threaded portion of outlet housing 96.

Alignment feature 66b is formed as a portion of outlet housing 96. Alignment feature 66b interfaces with slot 54b to align outlet housing 96 relative to outlet block 94. Alignment pin 81 extends between outlet block 94 and outlet housing 96 to further maintain alignment therebetween. Pin slot 62b extends into outlet housing 96. Alignment pin 81 is disposed in a receiving hole (not shown) in outlet block 94 and is received by pin slot 62b. In the example shown, pin slot 62b extends into an area of outlet housing 96 disposed opposite outlet port 102.

In the example shown, alignment feature 66b is D-shaped with the flat portion positioned in slot 54b. It is understood, however, that alignment feature 66b and slot 54b can be of any mating configuration suitable for locking outlet housing 96 to outlet block 94. Alignment feature 66b can be integrally formed with outlet housing 96, as shown, or can be separately formed, similar to alignment pin 81.

Outlet port 102 extends into outlet housing 96. Outlet port 102 is an exit port for the fluid flowing out of isolation valve 14. In the example shown, outlet port 102 extends through the flat portion of alignment feature 66b. It is understood, however, that outlet port 102 can extend into base 70 at any desired location. Wash ports 100a, 100b extend into outlet housing 96. Wash port 100a is connected to a wash reservoir to receive wash fluid from the wash reservoir. Wash port 100b is configured to receive the used wash fluid from within outlet housing 96 and provides an exit port for the wash fluid to exit outlet housing 96.

Cartridge rings 86a, 86b; wiper seals 88a, 88b; and chamber seals 90a, 90b are disposed within piston bore 104 of outlet housing 96. Piston bore 104 extends fully through outlet housing 96. Seal retainer 84 is disposed within outlet housing 96 and retains cartridge ring 86b, wiper seal 88b, and chamber seal 90b within outlet housing 96. End cap 92 is attached to an opposite end of outlet housing 96 from seal retainer 84 and retains cartridge ring 86a, wiper seal 88a, and chamber seal 90a within outlet housing 96.

Piston 72 at least partially extends into outlet housing 96 and is at least partially disposed in piston housing 80. Piston housing 80 is connected to outlet housing 96. Piston head 106 is disposed within piston housing 80. Piston seals 74 are disposed around piston head 106. Piston seal retainer 76 is attached to piston 72 and retains piston seals 74 on piston 72. Piston head 106 and piston seals 74 divide piston housing 80 into a dry chamber and a wet chamber. Piston spring 78 is disposed within the dry chamber of piston housing 80 and interfaces with piston 72. In the example shown, piston spring 78 interfaces with piston seal retainer 76. Piston spring 78 is configured to bias piston 72 towards shuttle housing 52. Piston spring 78 is configured to return piston 72 to a position associated with the isolated state of isolation valve 14 when isolation valve 14 transitions to the isolated state. Piston shaft 108 interfaces with chamber seals 90a, 90b with piston 72 in the position associated with the isolated state to prevent fluid from backflowing out of outlet housing 96.

Boost port 109 extends through piston housing 80 and is in fluid communication with the dry chamber. Boost port 109 can be connected to a power source to provide additional force to drive piston 72 to the piston closed position. For example, an air compressor can be connected to boost port 109 to provide compressed air to piston housing 80 to provide additional force to drive piston 72. While the power source is described as pneumatically driving piston 72, it is understood that any desired type of boost assembly can be utilized, such as hydraulic fluid.

A wash fluid source is connected to wash port 100a in outlet housing 96. During a wash cycle, the wash fluid flows through wash port 100a and enters the wet chamber through a first subset of housing ports 105. Piston 72 is driven rearward by inlet module 20 as isolation valve 14 transitions from the isolated state to the connected state. The piston 72 shifting rearward creates suction in the wet chamber to draw the wash fluid into the wet chamber from the wash fluid source. Piston 72 is driven forward as isolation valve 14 transitions from the connected state to the isolated state. Piston 72 moving forward drives the wash fluid out of the wet chamber through a second subset of housing ports 105. The wash fluid flows through the housing ports 105 to a wash chamber, discussed in more detail below, and exits outlet module 22 through wash port 100b.

Piston shaft 108 extends from piston head 106 and into piston bore 104 in outlet housing 96. Piston shaft 108 interfaces with each of cartridge rings 86a, 86b; wiper seals 88a, 88b; and chamber seals 90a, 90b with isolation valve 14 in the isolated state. Piston shaft 108 interfaces with cartridge ring 86b, wiper seal 88b, and chamber seal 90b with isolation valve 14 in the connected state. Piston shaft 108 includes a hollow end disposed opposite piston head 106 to receive stem 32 with isolation valve 14 in the connected state.

During operation, isolation valve 14 is transitioned between the isolated state and the connected state depending on the requirements of the spray system. Isolation valve 14 is in the isolated state to provide electrical isolation and in the connected state to provide fluid. Outlet module 22 is maintained at a fixed position relative to inlet module 20. While outlet module 22is described as being maintained in a fixed position, it is understood that, in some examples, outlet module 22 can be actuated while inlet module 20 can be maintained in a fixed position.

When flow is desired through isolation valve 14, actuating module 24 is activated. Drive piston 120 is driven by cylinder 118, such as by compressed air provided to cylinder. Drive piston 120 drives inlet module 20 in a first direction towards outlet module 22 to place isolation valve 14 in the connected state. As isolation valve 14 transitions to the connected state, stem 32 initially enters the bore in piston shaft 108. The connection between stem 32 and piston 72 concentrically aligns piston 72 and stem 32 on axis A-A to ensure concentricity as stem 32 transitions into piston bore 104 in outlet housing 96. An end of piston 72 engages valve seal 40a to provide a fluid seal between piston 72 and stem 32. The fluid seal between piston 72 and stem 32 prevents undesired fluid migration into the bore of piston 72 that receives stem 32.

Drive piston 120 continues to drive inlet module 20. Stem 32 pushes piston 72 rearward within outlet housing 96. Stem 32 and piston 72 pass through each of cartridge ring 86a, wiper seal 88a, and chamber seal 90a. A portion of sleeve 30 also passes through cartridge ring 86a, wiper seal 88a, and chamber seal 90a. Inlet module 20 continues to transition until sleeve flange 68 engages outlet housing 96. Sleeve 30 engaging outlet housing 96 prevents sleeve 30 from advancing any further within piston bore 104. Inlet spring 34 compresses between sleeve 30 and shuttle housing 52 as inlet module 20 continues to transition to the connected state.

With sleeve 30 held static, actuating module 24 continues to push inlet module 20 into engagement with outlet module 22. Stem 32 extends out of sleeve 30 and further into outlet module 22 thereby exposing the ports, discussed in more detail below, in stem 32 and opening a flowpath between inlet port 60 and outlet port 102. The spray fluid enters isolation valve 14 through inlet port 60, flows through a flowpath in shuttle housing 52 to stem 32, flows through stem 32 and exits ports in stem 32 within outlet housing 96, and flows through the flowpath in outlet housing to outlet port 102 where the fluid exits isolation valve 14.

As isolation valve 14 transitions to the connected state, stem 32 continues to push piston 72 rearward. Piston head 106 is driven within piston housing 80, increasing the volume of the wet chamber and creating suction in the wet chamber, thereby drawing wash fluid into the wet chamber from the wash fluid source.

Isolation valve 14 is transitioned from the connected state to the isolated state to stop flow and electrically isolate inlet module 20 from outlet module 22. Drive piston 120 is driven in a second direction, opposite the first direction and draws inlet module 20 away from outlet module 22. As inlet module 20 shifts in the second direction piston spring 78 maintains engagement between piston 72. Maintaining engagement between piston 72 and stem 32 ensures that no undesired leakage occurs during the transition.

Stem 32 retracts into sleeve 30, thereby closing the flowpath between inlet port 60 and outlet port 102. Inlet spring 34 maintains sleeve 30 in contact with outlet module 22 as stem 32 retracts within sleeve 30. Maintaining sleeve 30 in contact with outlet module 22 ensures that the ports through stem 32 are fully enclosed by sleeve 30 and that sleeve 30 engages with valve seal 40b, thereby preventing undesired leakage between sleeve 30 and stem 32.

Piston 72 transitions through and reengages with chamber seal 90a, cartridge ring 86a, and wiper seal 88a, thereby sealing any pathway to outlet port 102. As piston 72 transitions, piston head 106 reduces the volume of the wet chamber, thereby pumping wash fluid out of the wet chamber and to wash port 100b through the wash chamber defined at least in part by cartridge ring 86a. Stem 32 is pulled through the wash chamber as stem 32 exits outlet housing 96. The wash fluid being actively driven into the wash chamber by piston 72 creates turbulence in the wash chamber to assist in cleaning the fluid off of stem 32 as stem 32 is withdrawn. Cleaning stem 32 prevents any residue from the fluid from entering between stem 32 and sleeve 30, which could cause sticking or other undesired effects. For example, the spray fluid can be configured to cure in air, leading to undesired effects. The material curing on stem 32 and/or sleeve 30 can lead to damage to various seals, resulting in fluid leakage.

Actuating module 24 continues to drive inlet module 20, returning inlet module 20 to the position associated with the isolated state. Inlet module 20 is thereby electrically isolated from outlet module 22.

Isolation valve 14 provides significant benefits. Isolation valve 14 provides electrical isolation by generating an air gap between inlet module 20 and outlet module 22. The air gap eliminates all fluid that could create a conductive path between inlet module 20 and outlet module 22. In addition, stem 32 engaging piston 72 provides a fluid-tight connection as isolation valve 14 transitions between the connected and engaged states. The connection ensures that spray fluid does not leak and is not exposed to the air, which could cause undesired curing. In addition, piston 72 actively pumps wash fluid to clean the spray fluid off of stem 32 and piston 72, further preventing undesired curing. Piston 72 pumps the wash fluid based on isolation valve 14 transitioning between states, thereby providing a simple, effective pump for driving the wash fluid.

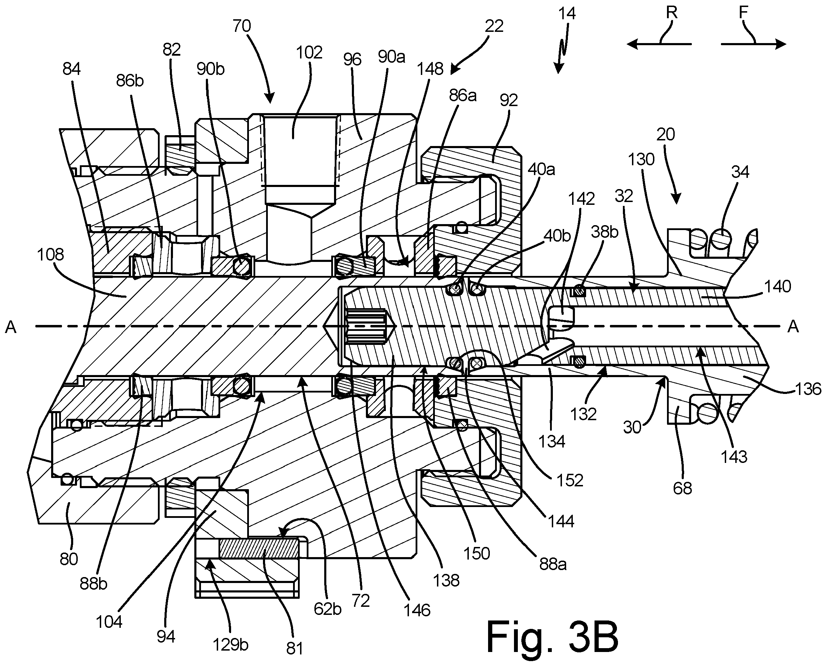

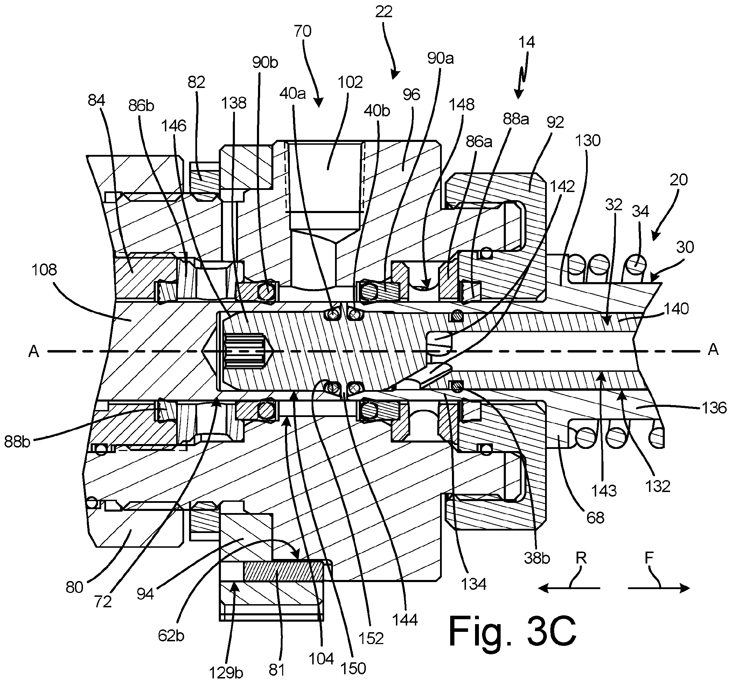

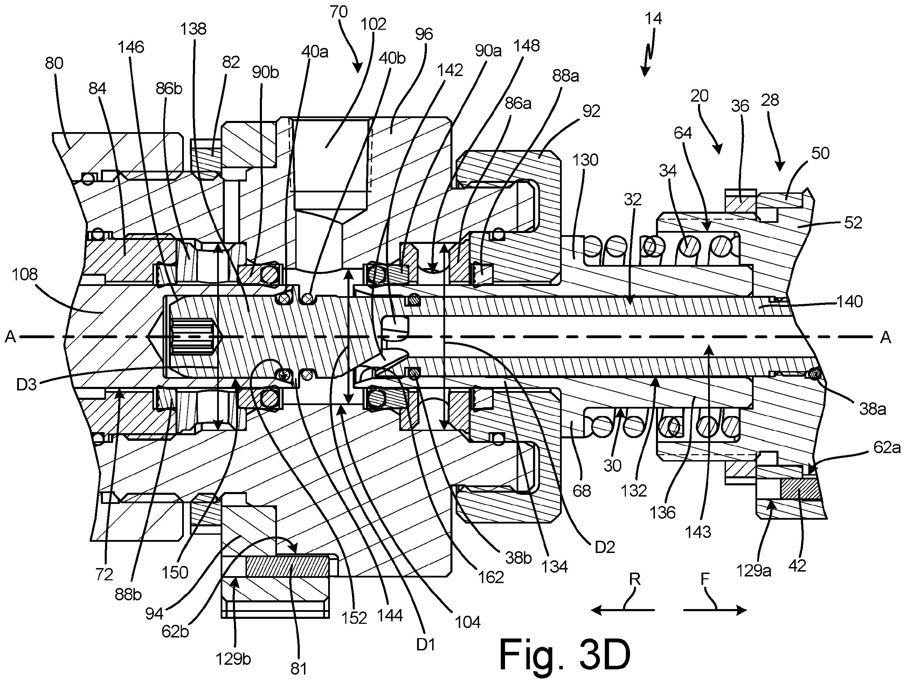

FIG. 3A is a cross-sectional view showing isolation valve 14 in the isolated state. FIG. 3B is a cross-sectional view showing isolation valve 14 in a first intermediate state. FIG. 3C is a cross-sectional view showing isolation valve 14 in a second intermediate state. FIG. 3D is a cross-sectional view showing isolation valve 14 in the connected state. FIGS. 3A-3D will be discussed together. Inlet module 20 and outlet module 22 of isolation valve 14 are shown.

Shuttle 28 (FIGS. 3A and 3D), sleeve 30; stem 32; inlet spring 34; shuttle lock nut 36 (FIGS. 3A and 3D); inner seals 38a, 38b; valve seals 40a, 40b; alignment pin 42 (FIGS. 3A and 3D); floating connector 44 (FIG. 3A); and retaining nut 46 (FIG. 3A) of inlet module 20 are shown. Shuttle 28 includes shuttle block 50 (FIGS. 3A and 3D) and shuttle housing 52 (FIGS. 3A and 3D). Shuttle block 50 includes pin bore 129a (FIGS. 3A and 3D). Shuttle housing 52 includes inlet port 60 (FIG. 3A), pin slot 62a (FIGS. 3A and 3D), and shuttle bore 64 (FIGS. 3A and 3D). Sleeve 30 includes sleeve flange 68, sleeve body 130, sleeve bore 132, first sleeve end 134, second sleeve end 136, and sleeve taper 162 (FIG. 3D). Stem 32 includes first end 138, second end 140, stem ports 142, stem passage 143, and stem flange 144. First end 138 includes stem taper 146.

Outlet module 22 includes base 70; piston 72; piston seals 74 (FIG. 3A); piston seal retainer 76 (FIG. 3A); piston spring 78 (FIG. 3A); piston housing 80; alignment pin 81; base lock nut 82; seal retainer 84, cartridge rings 86a, 86b; wiper seals 88a, 88b; chamber seals 90a, 90b; end cap 92; and wash chamber 148. Base 70 includes outlet block 94 and outlet housing 96. Outlet block 94 includes pin bore 129b. Outlet housing 96 includes pin slot 62b, outlet port 102, and piston bore 104. Piston 72 includes piston head 106 (FIG. 3A) and piston shaft 108. Piston shaft 108 includes receiving bore 150 and piston taper 152.

Shuttle housing 52 is mounted to shuttle block 50. Alignment pin 42 extends between pin bore 129a and pin slot 62a. Alignment pin 42 ensures proper alignment between shuttle housing 52 and shuttle block 50. Inlet port 60 extends into shuttle housing 52 and is configured to receive fluid from an upstream fluid source, such as main reservoir 12 (FIGS. 1A and 1B).

Stem 32 extends into shuttle bore 64 and is attached to shuttle housing 52. Stem 32 is cantilevered from shuttle housing 52 with first end 138 free and second end 140 connected to shuttle housing 52. Stem 32 can be connected to shuttle housing 52 in any desired manner. For example, second end 140 can include external threading configured to interface with internal threading in shuttle housing 52. Inner seal 38a is disposed at the interface between stem 32 and shuttle housing 52.

Stem passage 143 extends through stem 32 from second end 140 to stem ports 142. Stem ports 142 provides flowpaths for spray fluid to exit stem passage 143. First end 138 is disposed on a first side of stem ports 142 and second end 140 is disposed on a second side of stem ports 142 opposite first end 138. During operation, spray fluid enters stem passage 143 at second end 140 and flows through stem passage 143 to stem ports 142. In some examples, the fluid source connected to inlet port 60 is pressurized such that spray fluid is present in stem passage 143 when isolation valve 14 is in the isolated state and when isolation valve 14 is in the connected state.

Stem 32 extends through and is coaxial with sleeve 30. Stem 32 projects out of each end of the sleeve bore 132 extending through sleeve body 130. Inner seal 38b is disposed on the exterior of stem 32 between the exterior of stem 32 and the interior of sleeve 30. Inner seal 38b provides a dynamic, sliding seal between stem 32 and sleeve 30. Inner seal 38b prevents fluid from migrating between stem 32 and sleeve 30. Stem flange 144 extends radially from stem 32. Valve seals 40a, 40b extend around the exterior of stem 32 and are disposed on opposite sides of stem flange 144. Both valve seals 40a, 40b are disposed on first end 138. Stem taper 146 is disposed at the end of first end 138. Stem taper 146 encounters piston taper 152 and the interface therebetween aligns stem 32 within receiving bore 150 as stem 32 engages piston 72. Stem taper 146 thereby assists in ensuring concentricity as inlet module 20 interfaces with outlet module 22.

Sleeve 30 is supported by stem 32. Sleeve 30 translates axially along stem 32. Stem 32 and sleeve 30 are concentric and interaction between stem 32 and sleeve 30 maintains axial alignment on axis A-A. Sleeve flange 68 projects radially from sleeve body 130. First sleeve end 134 extends from sleeve flange 68 towards stem flange 144. Sleeve taper 162 is disposed at the distal end of first sleeve end 134. Sleeve taper 162 is configured to interface with valve seal 40b to close the flowpath through inlet module 20 and prevents fluid from flowing out of inlet module 20 between first sleeve end 134 and stem 32. Sleeve taper 162, flange 144, and valve seal 40b seal together. Stem 32 and sleeve 30 interface to seal any fluid in inlet module 20 from atmosphere.

Second sleeve end 136 extends from sleeve flange 68 towards shuttle 28. Second sleeve end 136 can extend at least partially into shuttle bore 64. Inlet spring 34 is disposed about second sleeve end 136 of sleeve 30. Inlet spring 34 extends between sleeve flange 68 and shuttle housing 52. Inlet spring 34 interfaces with sleeve flange 68 to bias sleeve 30 into sealing engagement with stem 32.

Outlet housing 96 is mounted to outlet block 94. Alignment pin 81 extends between pin bore 129b and pin slot 62b. Alignment pin 81 is substantially similar to alignment pin 42 and can be identical to alignment pin 42. Alignment pin 81 prevents relative rotation between outlet block 94 and outlet housing 96 to maintain alignment. Outlet port 102 extends into outlet housing 96 and is configured to provide fluid to a location downstream of isolation valve 14, such as pumps 16a, 16b (FIGS. 1A and 1B).

Piston bore 104 extends through outlet housing 96 along axis A-A. Piston bore 104 includes portions having varying diameters to ensure proper alignment of elements within piston bore 104. The central portion of piston bore 104 is disposed between chamber seals 90a, 90b and forms an outlet chamber for receiving spray fluid. The central portion has diameter D1. A first portion of piston bore 104 extends from the central portion and is capped by end cap 92. Cartridge ring 86a is disposed in the first portion between part of outlet housing 96 and end cap 92. The first portion has diameter D2. A second portion of piston bore 104 extends from the central portion and is capped by seal retainer 84. Cartridge ring 86b is disposed in the second portion between part of outlet housing 96 and seal retainer 84. The second portion has diameter D3. Diameters D2 and D3 are larger than diameter D1. In some examples, diameters D2 and D3 are the same. It is understood however, that diameters D1, D2, and D3 can have any desired relationship. Piston bore 104 can include further portions having varying diameters. For example, the portion of piston bore 104 between end cap 92 and cartridge ring 86a can have a diameter larger than diameter D2.

End cap 92 is attached to outlet housing 96 and encloses the first end of piston bore 104. End cap 92 retains wiper seal 88a, cartridge ring 86a, and chamber seal 90a in piston bore 104. Cartridge ring 86a is disposed between end cap 92 and chamber seal 90a. Cartridge ring 86a maintains chamber seal 90a in piston bore 104. Cartridge ring 86a includes windows to allow fluid flow into and out of wash chamber 148 defined by cartridge ring 86a. In the example shown, end cap 92 supports wiper seal 88a, but it is understood that wiper seal 88a can be disposed within piston bore 104 in any manner suitable for positioning wiper seal 88a relative to sleeve 30, stem 32, and piston 72 and on axis A-A. A portion of end cap 92 contacts cartridge ring 86a to maintain cartridge ring 86a in piston bore 104.

End cap 92 can be attached to outlet housing in any desired manner. For example, end cap 92 can be attached to outlet housing 96 by interfaced threading, a bayonet connection, or press-fitting, among other options. Cartridge ring 86a at least partially defines wash chamber 148 within piston bore 104. As discussed in more detail below, wash chamber 148 is fluidly connected to wet chamber 156 to receive wash fluid from wet chamber 156. Wash fluid flows through wash chamber 148 between wiper seal 88a and chamber seal 90a. Fluid in outlet module 22 is sealed from atmosphere by piston 72 interfacing with wiper seal 88a and chamber seal 90a.

Wiper seal 88b, cartridge ring 86b, and chamber seal 90b are disposed at a second end of piston bore 104. Seal retainer 84 is attached to outlet housing 96 and encloses the second end of piston bore 104 to retain wiper seal 88b, cartridge ring 86b, and chamber seal 90b within piston bore 104. Cartridge ring 86b is disposed between seal retainer 84 and chamber seal 90b. Cartridge ring 86b maintains chamber seal 90b in piston bore 104. A portion of seal retainer 84 contacts cartridge ring 86b. Wiper seal 88b is supported by seal retainer 94. Seal retainer 84 can be attached to outlet housing 96 in any desired manner. For example, seal retainer 84 can be attached to outlet housing 96 by interfaced threading, among other options.

Piston housing 80 is attached to an end of outlet housing 96 proximate the second end of piston bore 104. Piston 72 is at least partially disposed in piston housing 80 and extends into piston bore 104 through seal retainer 84, wiper seal 88b, cartridge ring 86b, and chamber seal 90. Piston head 106 is disposed in piston housing 80 and is movable within piston housing 80 along axis A-A. Piston shaft 108 extends from piston head 106 into piston bore 104. Piston shaft 108 is movable within piston bore 104 along axis A-A. With isolation valve 14 in the isolated state, piston shaft 108 extends through each of seal retainer 84; cartridge rings 86a, 86b; wiper seals 88a, 88b; and chamber seals 90a, 90b. With isolation valve 14 in the connected state, piston shaft 108 extends through seal retainer 84, cartridge ring 86b, wiper seal 88b, and chamber seal 90b. An end of piston shaft 108 opposite piston head 106 includes piston taper 152. Receiving bore 150 and the piston taper 152 are configured to facilitate alignment with stem 32 as stem 32 interfaces with piston 72.

Piston seals 74 are disposed around piston head 106 and engage an inner wall of piston housing 80. Piston seal retainer 76 is attached to piston head 106 and retains piston seals 74 on piston head 106. Piston head 106 divides piston housing 80 into dry chamber 154 and wet chamber 156. Piston spring 78 is disposed in dry chamber 154 and is configured to bias piston 72 towards a position associated with the isolated state, which is shown in FIG. 3A. Wet chamber 156 is fluidly connected to wash chamber 148 via flowpaths extending through outlet housing 96, as discussed in more detail below.

During operation, isolation valve 14 is initially in the isolated state shown in FIG. 3A. Gap 26 is formed between inlet module 20 and outlet module 22 to electrically isolate inlet module 20 from outlet module 22. Gap 26 is of a sufficient size to electrically isolate inlet module 20 and outlet module 22. For example, the length of gap 26 can be at least 1 inch (2.54cm) for every 10kV of charge. In a 60KV system, the length of gap 26 is at least 6 inches.

Isolation valve 14 is actuated from the isolated state in FIG. 3A to the connected state in FIG. 3D in response to a fluid connection being desired. Actuating module 24 (best seen in FIGS. 2A-2C) drives inlet module 20 towards outlet module 22. Isolation valve 14 initially enters the first intermediate state shown in FIG. 3B. In the first intermediate state, first contact is made between inlet module 20 and outlet module 22. First end 138 of stem 32 enters receiving bore 150 in piston 72. As first end 138 enters receiving bore 150, stem taper 146 encounters piston taper 152, which interfacing assists in guiding first end 138 into receiving bore 150. Stem bore 150 is sized to tightly interface around first end 138 to further facilitate alignment. Stem taper 146, piston taper 152, stem bore 150, and first end 138 thereby assist in maintaining concentricity between stem 32 and piston 72. Piston 72, and specifically piston taper 152, contacts and seals against stem flange 144 and valve seal 40a.

Inlet module 20 is driven further into engagement with outlet module 22 and transitions from the first intermediate state shown in FIG. 3B to the second intermediate state shown in FIG. 3C. Each of piston 72 and sleeve 30 seal with stem 32 at stem flange 144 as isolation valve 14 transitions from the first intermediate state to the second intermediate state. The seam(s) at the interface between piston 72, stem 32, and sleeve 30 passes through wiper seal 88a, cartridge ring 86a, and chamber seal 90a during the transition to the second intermediate state.

With isolation valve 14 in the second intermediate state, second contact is made between inlet module 20 and outlet module 22. The second contact is between sleeve 30 and outlet housing 96. The second contact braces sleeve 30 such that stem 32 can shift relative to sleeve 30 while sleeve 30 is held at a static location. Sleeve flange 68 contacts and braces against outlet module 22 to maintain sleeve 30 in the position shown in FIG. 3C. It is understood, however, that sleeve 30 can be braced in any desired manner. In the example shown, sleeve flange 68 braces against end cap 92.

Inlet module 20 is driven from the second intermediate state to the connected state shown in FIG. 3D. Sleeve 30 remains in the position shown in FIG. 3C as isolation valve 14 transitions from the second intermediate state to the connected state. With sleeve 30 held steady, each of shuttle 28 and stem 32 continue to transition towards outlet module 22. Inlet spring 34 compresses between sleeve flange 68 and shuttle housing 52.

Stem 32 proceeds further into piston bore 104 and pushes piston 72 rearward through piston bore 104. Stem 32 shifts relative to sleeve 30 such that sleeve 30 disengages from stem flange 144. Inner seal 38b remains between stem 32 and sleeve 30 to maintain a fluid seal and prevent fluid from migrating between stem 32 and sleeve 30. Stem ports 142 are exposed within the portion of piston bore 104 between chamber seals 90a, 90b. The portion of piston bore 104 between chamber seals 90a, 90b can also be referred to as an outlet chamber. With stem ports 142 exposed in the outlet chamber, a flowpath is opened between inlet port 60 in inlet module 20 and outlet port 102 in outlet module 22. The fluid enters inlet module 20 through inlet port 60, enters stem 32 through second end 140, flows through stem passage 143, exits stem 32 through stem ports 142, and exits outlet module 22 through outlet port 102. Stem ports 142 are oriented to direct the fluid flow radially outward and into outlet module 22. Sleeve taper 162 forms an extension of stem ports 142 with isolation valve 14 in the connected state. Stem ports 142 and sleeve taper 162 turn the spray fluid from an axial flow to provide a transition to the flowpath through base 70 to outlet port 102. Turning the flow smooths flow of the spray fluid and prevents turbulence in the outlet chamber between chamber seals 90a, 90b. A smoother flow provides a quicker and more efficient flow through isolation valve 14. Isolation valve 14 is maintained in the connected state as fluid flows through isolation valve 14.

When electrical isolation is desired, isolation valve 14 is transitioned from the connected state to the isolated state. Isolation valve 14 initially shifts from the connected state in FIG. 3D to the second intermediate state in FIG. 3C. Stem ports 142 transition back within sleeve bore 132 such that stem ports 142 are covered by sleeve body 130. Sleeve 30 reengages stem flange 144 and valve seal 40b, thereby sealing the flowpath from inlet port 60 through stem 32 and preventing any fluid from leaking between sleeve 30 and stem 32. Inlet spring 34 maintains sleeve 30 in the position shown in FIGS. 3C and 3D as inlet module 20 is pulled from the connected state to the second intermediate state. Piston spring 78 biases piston 72 towards inlet module 20 thereby maintaining contact between piston 72 and stem flange 144 as isolation valve 14 transitions from the connected state to the second intermediate state.

Isolation valve 14 transitions from the second intermediate state shown in FIG. 3C to the first intermediate state shown in FIG. 3B. The seam at the interface between piston 72, stem 32, and sleeve 30 passes through cartridge ring 86a and wiper seal 88a. As discussed in more detail below, piston 72 pumps wash fluid out of wet chamber 156 and to wash chamber 148 as isolation valve 14 transitions from the connected state to the isolated state. The wash fluid flows through wash chamber 148 as the wash fluid flows from wet chamber 156 to wash port 100b (FIG. 6B). The wash fluid being actively pumped by piston 72 into wash chamber 148 creates a turbulent flow in wash chamber 148, which better cleans those portions of sleeve 30, stem 32, and piston 72 passing through wash chamber 148. Wiper seal 88a, which can be a u-cup seal among other options, further removes fluid residue from the exterior of those portions of sleeve 30, stem 32, and piston 72 passing through wiper seal 88a. The lips of the u-cup of wiper seal 88a face rearward towards wet chamber 156 to facilitate wiping of fluid off of the exteriors of sleeve 30, stem 32, and piston 72.

Isolation valve 14 transitions from the first intermediate state shown in FIG. 3B to the isolated state shown in FIG. 3A. Stem 32 disengages from piston 72 and first end 138 exits receiving bore 150 in piston 72, thereby creating air gap 26 between inlet module 20 and outlet module 22. The length of air gap 26 continues to grow as inlet module 20 shifts away from outlet module 22. Inlet module 20 continues to shift away from outlet module 22 until the air gap 26 is sized to electrically isolate inlet module 20 and outlet module 22. The size of the air gap 26 can be based on the voltage utilized during spraying. Inlet module 20 is thereby electrically isolated from outlet module 22 and spraying can resume.

Isolation valve 14 provides significant advantages. Isolation valve 14 allows fluid flow when in the connected state and stops fluid flow when not in the connected state, without requiring the use of tools or other hardware. Isolation valve 14 prevents fluid from being exposed to the atmosphere and provides a physical isolation gap 26 when in the isolated state. This is especially useful when moving water-based fluids that are electrically charged, such as in an electrostatic spray system similar to electrostatic spray system 10. Isolation valve 14 does not include any ball/seat check valves to seal fluid from atmosphere. Instead, stem 32 and sleeve 30 interface to seal fluid from atmosphere in inlet module 20 and piston 72 interfaces with chamber seals 90a, 90b and wiper seals 88a, 88b to seal fluid in outlet module 22 from atmosphere. In addition, the connecting geometry of stem 32, sleeve 30, and piston 72 ensures concentricity and proper alignment as isolation valve 14 transitions into the connected state. There are no springs or other difficult to access and clean components in the fluid flow path between inlet port 60 and outlet port 102.

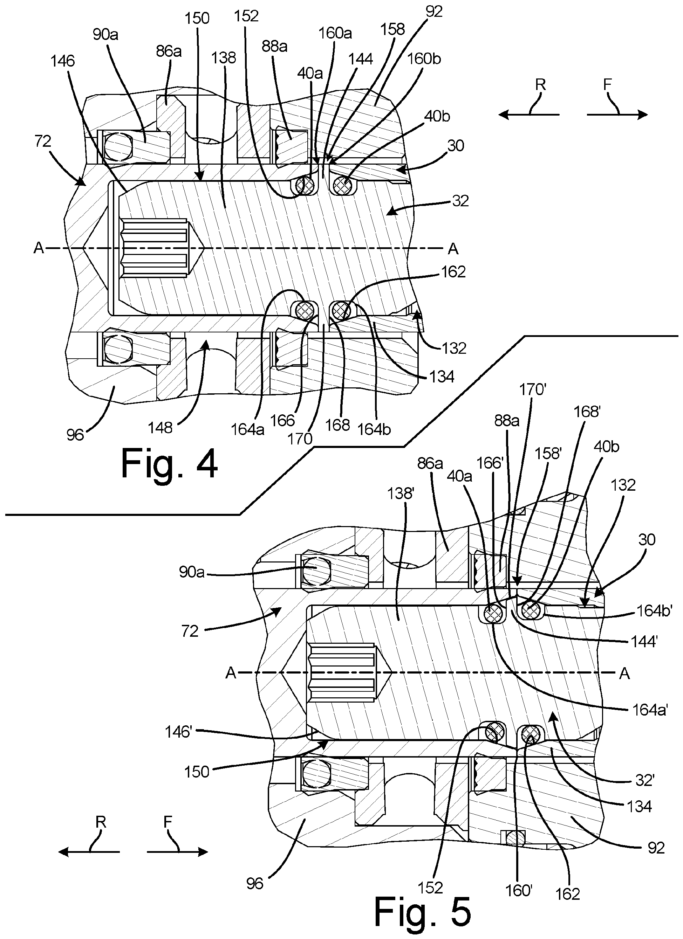

FIG. 4 is an enlarged cross-sectional view of interface 158 between sleeve 30, stem 32, and piston 72 with isolation valve 14 (FIGS. 1A-3D) in the first intermediate state shown in FIG. 3B. Sleeve 30; stem 32; valve seals 40a, 40b; piston 72; cartridge ring 86a; wiper seal 88a; chamber seal 90a; end cap 92; and outlet housing 96 are shown. Sleeve bore 132, first sleeve end 134, and sleeve taper 162 of sleeve 30 are shown. First end 138, stem flange 144, and stem seal grooves 164a, 164b of stem 32 are shown. Stem flange 144 includes first flange side 166, second flange side 168, and free end 170. Receiving bore 150 and piston taper 152 of piston 72 are shown.

Seams 160a, 160b are formed at the interface 158 between piston 72, stem flange 144, and sleeve 30. Interface 158 is a double seam in that seam 160a is formed at the interface between piston 72 and first flange side 166 and seam 160b is formed at the interface between sleeve 30 and second flange side 168. Each of first flange side 166 and second flange side 168 are flat and extend radially relative to axis A-A. The distal ends of piston 72 and sleeve 30 are also flat to interface with first flange side 166 and second flange side 168, respectively. Stem seal groove 164a is disposed on first flange side 166 of stem flange 144 and stem seal groove 164b is disposed on second flange side 168 of stem flange 144. Valve seals 40a, 40b are disposed in stem seal grooves 164a, 164b, respectively.

Sleeve taper 162 is disposed at the distal end of first sleeve end 134. Sleeve taper 162 extends annularly at first sleeve end 134. Sleeve taper 162 provides a transition between sleeve bore 132 and the distal end of sleeve 30. Sleeve taper 162 extends over and is in contact with valve seal 40b, thereby forming a seal to prevent fluid from entering between sleeve 30 and stem 32 at interface 158.

Piston 72 extends over valve seal 40a and contacts first flange side 166 of stem flange 144. More specifically, piston taper 152 extends over and is in contact with valve seal 40a. Sleeve 30 extends over valve seal 40b and contacts second flange side 168 of stem flange 144. More specifically, sleeve taper 162 extends over and is in contact with valve seal 40b. Stem flange 144 is thus disposed between and separates the distal ends of piston 72 and sleeve 30. Free end 170 of stem flange 144 is exposed and is not covered by either piston 72 or sleeve 30.

During operation, stem flange 144 directly contacts the distal end of piston 72 to exert a pushing force on piston 72. As isolation valve 14 transitions from the first intermediate state to the connected state, stem flange 144 exerts the force on piston 72 to drive piston 72 in direction R. Seams 160a, 160b shift in direction R and pass through each of wiper seal 88a, cartridge ring 86a, and chamber seal 90a, respectively, as isolation valve 14 transitions to the connected state from the first intermediate state. Seams 160a, 160b shift in direction F and passes through each of chamber seal 90a, cartridge ring 86a, and wiper seal 88a, respectively, as isolation valve 14 transitions to the first intermediate state from the connected state.

As seams 160a, 160b shift in direction F, seams 160a, 160b pass through wash chamber 148 defined by cartridge ring 86a. As discussed in more detail below, wash fluid is pumped through wash chamber 148 as piston 72 shifts in direction F. The wash fluid cleans seams 160a, 160b to remove any residual spray fluid from seams 160a, 160b. Seams 160a, 160b pass through wiper seal 88a after passing through wash chamber 148. Wiper seal 88a is configured to remove any residual fluid at seams 160a, 160b, thereby preventing undesired curing of the spray material at seams 160a, 160b, which could lead to sticking, among other issues. In the example shown, wiper seal 88a is a u-cup seal. It is understood, however, that wiper seal 88a can be of any type suitable for wiping the exterior of sleeve 30, stem 32, and piston 72 as seams 160a, 160b pass through wiper seal 88a.

Interface 158 facilitates alignment between sleeve 30, stem 32, and piston 72 during operation. The alignment facilitates efficient sealing as isolation valve 14 transitions between states. In addition, interface 158 provides a tightly interfaced, nearly joint-free surface for sliding over wiper seal 88a and chamber seal 90a. Interface 158 thereby preserves the integrity of the seals during the state transitions. Moreover, having minimal joints at interface minimizes any fluid residue sticking at interface 158. Interface 158 also passes through wiper seal 88a as isolation valve 14 transitions out of the connected state. Wiper seal 88a removes residual fluid located at interface 158 to ensure that those portions of stem 32, sleeve 30, and piston 72 exposed to the atmosphere are clean of any fluid, which can cure when exposed to the atmosphere.

FIG. 5 is an enlarged cross-sectional view of interface 158' between sleeve 30, stem 32', and piston 72 with isolation valve 14 (FIGS. 2A-3D) in the first intermediate state shown in FIG. 3B. Sleeve 30; stem 32'; valve seals 40a, 40b; piston 72; cartridge ring 86a; wiper seal 88a; chamber seal 90a; end cap 92; and outlet housing 96 are shown. Sleeve bore 132, first sleeve end 134, and sleeve taper 162 of sleeve 30 are shown. First end 138'; stem flange 144'; stem taper 146'; and stem seal grooves 164a', 164b' of stem 32' are shown. Stem flange 144' includes first flange side 166', second flange side 168', and free end 170'. Receiving bore 150 and piston taper 152 of piston 72 are shown.

Seam 160' is formed at interface 158' between piston 72, stem flange 144', and sleeve 30. Interface 158' is a single seam interface in that only a single seam 160' is exposed on the exterior at interface 158'. Each of first flange side 166' and second flange side 168' are flat and extend radially relative to axis A-A. Free end 170' of stem flange 144' is sloped to mate with piston taper 152. While free end 170' is shown as sloped to mate with piston taper 152, it is understood that free end 170' can be sloped to mate with sleeve taper 162 and/or sloped in both the forward and rearward directions to mate with each of piston taper 152 and sleeve taper 162. In some examples, free end 170' can be flat, similar to free end 170 (FIG. 4).

The distal ends of piston 72 and sleeve 30 are flat and contact each other to form seam 160'. Piston taper 152 extends annularly about axis A-A between a radially-inner end of the flat distal end and receiving bore 150. Piston taper 152 is sloped to provide a face for actively engaging with and disengaging from valve seal 40a. Sleeve taper 162 extends annularly about axis A-A between a radially-inner end of the flat distal end of sleeve 30 and sleeve bore 132. Sleeve taper 162 is sloped to provide a face for actively engaging with and disengaging from valve seal 40b. Sleeve taper 162 also provides an extension to the flowpaths through stem ports 142 (best seen in FIG. 3D) when isolation valve 14 is in the connected state (FIG. 3D).

Stem seal groove 164a' is disposed on first flange side 166' of stem flange 144' and stem seal groove 164b' is disposed on second flange side 168' of stem flange 144'. Valve seals 40a, 40b are disposed in stem seal grooves 164a', 164b', respectively. In the example shown, stem seal groove 164a' extends further into stem 32 than stem seal groove 164b' such that stem seal groove 164a' is deeper than stem seal groove 164b'. As such, the base of stem seal groove 164b' can have a larger diameter relative to axis A-A than stem seal groove 164a'. While stem seal grooves 164a', 164b' have differing diameters, first flange side 166' and second flange side 168' can be the same length due to sloped free end 170'. In other examples, first flange side 166' and second flange side 168' can have different lengths.

Piston 72 extends over valve seal 40a and over free end 170' of stem flange 144'. More specifically, piston taper 152 extends over and is in contact with valve seal 40a. Sleeve 30 extends over valve seal 40b and contacts piston 72. More specifically, sleeve taper 162 extends over and is in contact with valve seal 40b. First end 138 of stem 32' can be sized to contact the base of receiving bore 150 such that stem 32' exerts a pushing force on piston 72 as isolation valve 14 transitions to the connected state. The distal end of sleeve 30 contacts the distal end of piston 72. In some examples, sleeve 30 can also exert a pushing force on piston 72. While each of stem 32' and sleeve 30 are described as pushing piston 72, it is understood that stem 32' can be spaced from the bottom of receiving bore 150 such that the pushing force is exerted on piston 72 at interface 158', similar to the example shown in FIG. 4. In other examples, stem 32' can be sized such that sleeve 30 contacts piston 72 but little to no pushing force is exerted on piston 72 at interface 158'.

Seam 160' shifts in direction R and passes through each of wiper seal 88a, cartridge ring 86a, and chamber seal 90a, respectively, as isolation valve 14 transitions from the first intermediate state to the connected state. Seam 160' shifts in direction F and passes through each of chamber seal 90a, cartridge ring 86a, and wiper seal 88a, respectively, as isolation valve 14 transitions to the first intermediate state from the connected state.

As seam 160' shifts in direction F, seam 160' passes through wash chamber 148 defined by cartridge ring 86a. As discussed in more detail below, wash fluid is pumped through wash chamber 148 as piston 72 shifts in direction F. The wash fluid cleans seam 160' to remove any spray fluid from seam 160'. Seam 160' passes through wiper seal 88a after passing through wash chamber 148. Wiper seal 88a is configured to remove any residual fluid at seam 160'. In the example shown, wiper seal 88a is a u-cup seal. It is understood, however, that wiper seal 88a can be of any type suitable for wiping fluid from seam 160' as seam 160' passes through wiper seal 88a.

Interface 158' facilitates alignment between sleeve 30, stem 32', and piston 72 during operation. The alignment facilitates efficient sealing as isolation valve 14 transitions between states. In addition, interface 158' provides a tightly interfaced, nearly joint-free surface for sliding over wiper seal 88a and chamber seal 90a. Interface 158' thereby preserves the integrity of the seals during the state transitions. Moreover, having minimal joints at interface minimizes any fluid residue sticking at interface 158'. Interface 158' also passes through wiper seal 88a as isolation valve 14 transitions out of the connected state. Wiper seal 88a removes residual fluid located at interface 158' to ensure that those portions of sleeve 30, stem 32', and piston 72 exposed to the atmosphere are clean of any fluid, which can cure when exposed to the atmosphere.

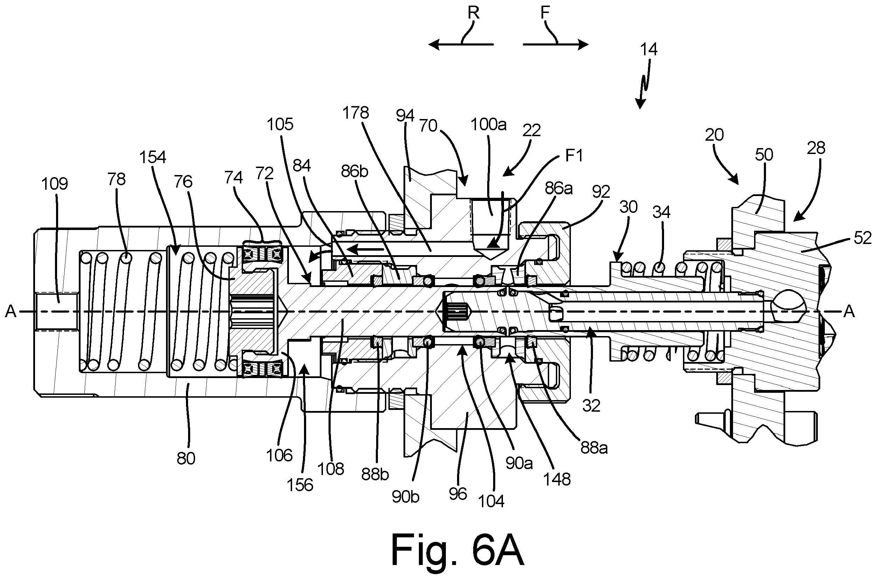

FIG. 6A is a cross-sectional view of isolation valve 14 showing an inlet wash path. FIG. 6B is a cross-sectional view of isolation valve 14 showing an outlet wash path. FIGS. 6A and 6B will be discussed together. Inlet module 20 and outlet module 22 of isolation valve 14 are shown. Shuttle 28, sleeve 30, stem 32, and inlet spring 34 of inlet module 20 are indicated. Shuttle 28 includes shuttle block 50 and shuttle housing 52. Base 70; piston 72; piston seals 74; piston seal retainer 76; piston spring 78; piston housing 80; seal retainer 84; cartridge rings 86a, 86b; wiper seals 88a, 88b; chamber seals 90a, 90b; end cap 92; and wash chamber 148 of outlet module 22 are indicated. Base 70 includes outlet block 94 and outlet housing 96. Wash ports 100a, 100b (collectively herein "wash port 100"); piston bore 104; housing ports 105; wash pathway 178, and wash pathway 180 of outlet housing 96 are shown. Piston 72 includes piston head 106 and piston shaft 108.

Wash ports 100a, 100b are formed in outlet housing 96. Wash port 100a is fluidly connected to a wash fluid source to receive wash fluid from the wash fluid source. For example, a reservoir of wash fluid can be disposed in an electrical isolation housing with the isolation valve. An inlet check valve is disposed between wash port 100a and the wash fluid source to prevent backflow of wash fluid through wash port 100a. The inlet check valve can be of any desired configuration, such as a ball and seat. The inlet check valve can be mounted directly to wash port 100a or disposed at any other location between wash port 100a and the wash fluid source.

Wash pathway 178 extends through outlet housing 96 from wash inlet port 100a to inlet ones of housing ports 105. Housing ports 105 provide the wash fluid to wet chamber 156 defined in piston housing 80 between piston head 106 and outlet housing 96. An inlet fluid flow is shown in FIG. 6A and indicated by arrows F1.

Wash port 100b is fluidly connected to a wash fluid receiver downstream of wash port 100b. In some examples, the wash fluid source and the wash fluid receiver can be the same reservoir, such that wash fluid is circulated through a fluid loop. In other examples, the wash fluid receiver is a different reservoir from the wash fluid source. An outlet check valve is disposed between wash port 100b and the wash fluid receiver to prevent backflow of wash fluid through wash port 100b. The outlet check valve can be of any desired configuration, such as a ball and seat. The outlet check valve can be mounted directly to wash port 100b or disposed at any other location between wash port 100b and the wash fluid receiver.

Wash pathway 180 extends through outlet housing 96 from outlet ones of housing ports 105 to wash port 100b. In some examples, housing ports 105 function as both the inlet and outlet ones of housing ports 105. Wash chamber 148 is formed in a portion of wash pathway 180 passing through piston bore 104. Wash chamber 148 is defined, at least in part, by cartridge ring 86a and between chamber seal 90a and wiper seal 88a. Wash chamber 148 is positioned within piston bore 104 such that the interface between stem 32, sleeve 30, and piston 72 passes through wash chamber 148 as isolation valve 14 transitions between states. An outlet fluid flow is shown in FIG. 6B and indicated by arrows F2.

During operation, piston 72 acts as a wash pump to pump wash fluid through the wash fluid circuit and to clean residual fluid from components exposed to spray fluid. Portions of stem 32, sleeve 30, and piston 72 are exposed to the spray fluid when isolation valve 14 is in the connected state. The interface between stem 32, sleeve 30, and piston 72 is exposed to the spray fluid, which can cure when exposed to atmosphere. To prevent undesired curing, the spray fluid is cleaned from stem 32, sleeve 30, and piston 72 as isolation valve 14 transitions to the isolated state.

Initially, isolation valve 14 transitions to the connected state from the isolated state. Stem 32 extends into piston 72 and inlet module 20 drives piston 72 in direction R. As piston 72 shifts rearward within piston bore 104, piston head 106 shifts rearward within piston housing 80. Piston head 106 shifting rearward increases the volume of wet chamber 156. The increased volume of wet chamber 156 creates suction that opens the inlet check valve, thereby opening a flowpath between the wash fluid source and wet chamber 156. Piston head 106 draws the wash fluid into wet chamber 156 through wash port 100a, wash pathway 178, and housing port 105. With isolation valve 14 in the connected state, piston head 106 stops moving rearward and the suction stroke of piston 72 is complete.

Isolation valve 14 then transitions from the connected state to the isolated state. Inlet module 20 shifts in direction F, thereby pulling stem 32 in direction F. Piston 72 maintains contact with stem 32 as stem 32 shifts in direction F. Piston spring 78 and/or pressurized fluid provided to dry chamber 154 through boost port 109 drive piston 72 in direction F to maintain that contact. As piston 72 shifts in direction F, piston head 106 is driven into wet chamber 156 and reduces the volume of wet chamber 156. Piston 72 pumps the wash fluid out of wet chamber 156 and through wash pathway 180. The wash fluid flows to wash chamber 148 and encounters those portions of stem 32, sleeve 30, and piston 72 passing through wash chamber 148. A turbulent flow is created in wash chamber 148, which further assists in cleaning. The wash fluid flows downstream from wash chamber 148 and exits outlet module 22 through wash port 100b. Wiper seal 88a is disposed on the exit side of wash chamber 148 and wipes sleeve 30, stem 32, and piston 72 clean. The wash fluid is actively pumped through wash chamber 148 as piston 72 shifts in direction F. Piston 72 completes the pumping stroke when piston 72 is in the position associated with the isolated state of isolation valve 14.

In some examples, the wash system can function as an inlet/outlet system that circulates wash fluid from the wash fluid source with a single wash port 100, such as wash port 100b. For example, wash port 100b can be fluidly connected to the wash fluid source to receive/deposit wash fluid from/into the wash fluid source. A wash pathway, such as wash pathway 180, extends from the single wash port 100 and provides a fluid pathway between wash port 100 and wet chamber 156. In the single port configuration, both the inlet flow and the outlet flow flow through the same wash pathway.

An example of the single port configuration utilizing wash port 100b is discussed in more detail. The inlet flow flows through wash pathway 180 counter to the arrows F2 shown in FIG. 6B. The outlet flow flows through wash pathway 180 in the direction of arrows F2 shown in FIG. 6B. The single port connection forces incoming wash fluid to follow the same path as the outgoing wash fluid and does not require check valves to control flow direction. During operation of the single port configuration, piston 72 continues to act as a wash pump to push the wash fluid. Isolation valve 14 transitions to the connected state from the isolated state. Stem 32 extends into piston 72 and inlet module 20 drives piston 72 in direction R. As piston 72 shifts rearward within piston bore 104, piston head 106 shifts rearward within piston housing 80. Piston head 106 shifting rearward increases the volume of wet chamber 156, creating suction that draws the wash fluid into wet chamber 156 through wash port 100b, wash pathway 180, and housing port 105. With isolation valve 14 in the connected state, piston head 106 stops moving rearward and the suction stroke of piston 72 is complete. The isolation valve 14 then transitions from the connected state to the isolated state. Inlet module 20 shifts in direction F, thereby pulling stem 32 in direction F. Piston 72 maintains contact with stem 32 as stem 32 shifts in direction F. Piston spring 78 and/or pressurized fluid provided to dry chamber 154 through boost port 109 drive piston 72 in direction F to maintain that contact. As piston 72 shifts in direction F, piston head 106 is driven into wet chamber 156 and reduces the volume of wet chamber 156. Piston 72 pumps the wash fluid out of wet chamber 156 and through wash pathway 180. The wash fluid flows to wash chamber 148 and encounters those portions of stem 32, sleeve 30, and piston 72 passing through wash chamber 148. A turbulent flow is created in wash chamber 148, which further assists in cleaning. The wash fluid flows downstream from wash chamber 148 and exits outlet module 22 through wash port 100b. Wiper seal 88a is disposed on the exit side of wash chamber 148 and wipes sleeve 30, stem 32, and piston 72 clean. The wash fluid is actively pumped through wash chamber 148 as piston 72 shifts in direction F. Piston 72 completes the pumping stroke when piston 72 is in the position associated with the isolated state of isolation valve 14.

The wash system of isolation valve 14 provides significant advantages. Piston 72 pumps the wash fluid on every state cycle of isolation valve 14, thereby ensuring that the interface between stem 32, sleeve 30, and piston 72 is always washed to remove any residual spray fluid. In addition, piston 72 pumps the wash fluid based on isolation valve 14 changing states. Isolation valve 14 does not require any external components or pumps to drive the wash fluid. The wash system is built into isolation valve 14 and does not require any other system control to function. Moreover, wiper seal 88a is disposed on the exit side of wash chamber 148 and wipes sleeve 30, stem 32, and piston 72 clean to further ensure that no residual fluid remains on the exterior of those components. The single port wash configuration both pulls wash fluid through wash chamber 148 from the port 100 and drives the wash fluid through wash chamber 148 to the port 100. Driving the fluid in both direction can further facilitate cleaning and provides a wash flow as isolation valve 14 is both transitioning to the connected state and transitioning from the connected state.

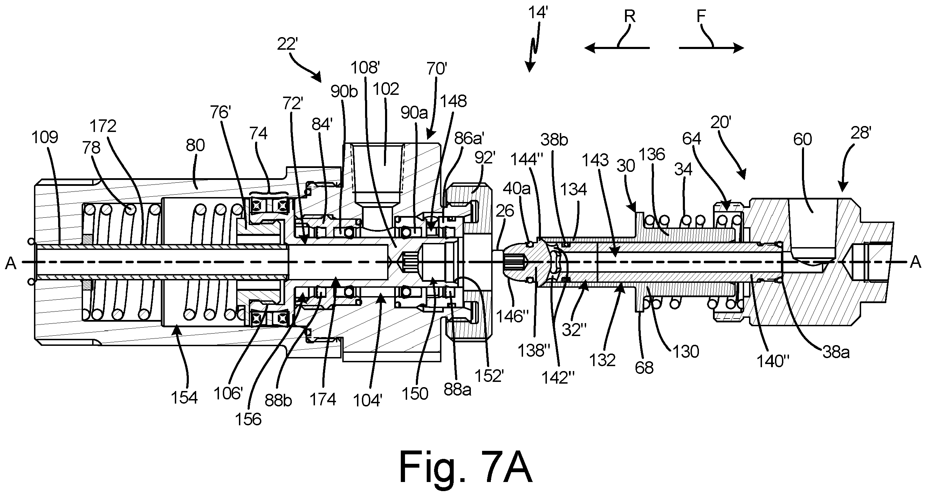

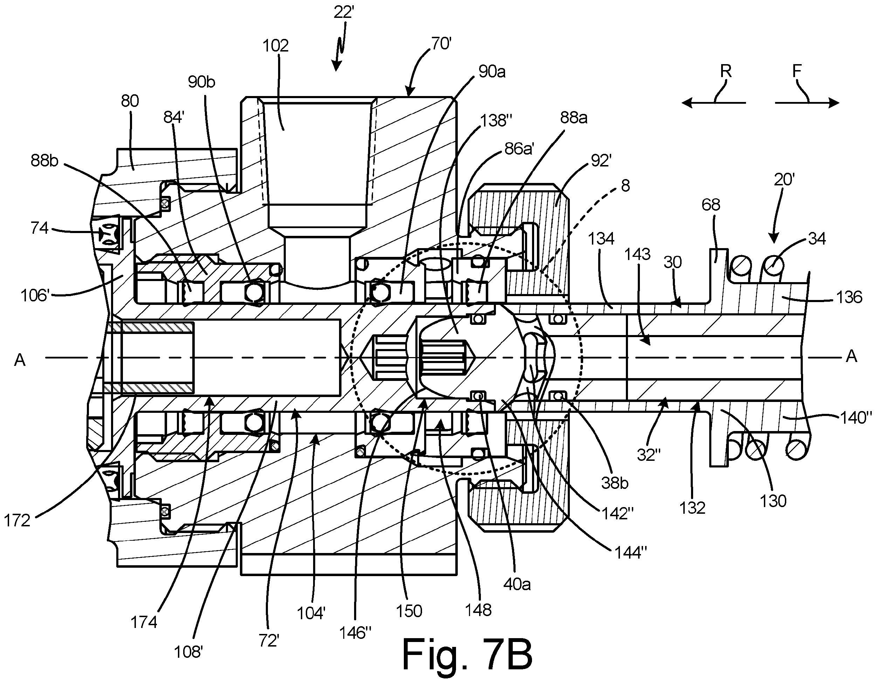

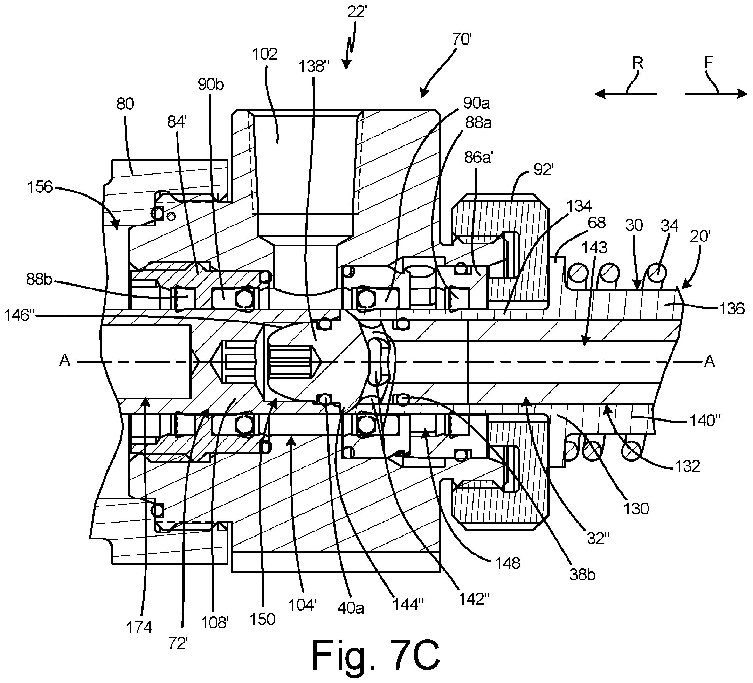

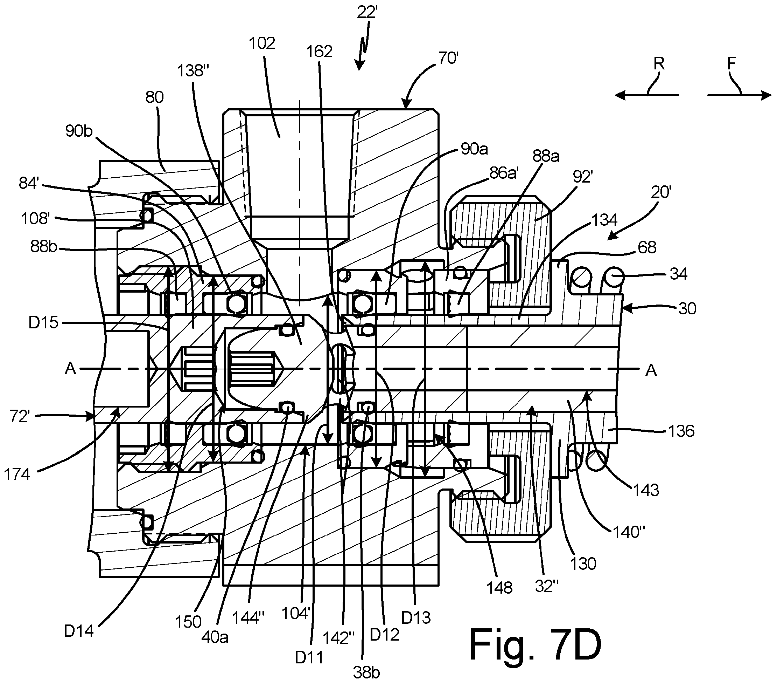

FIG. 7A is a cross-sectional view of isolation valve 14' in an isolated state. FIG. 7B is a cross-sectional view of isolation valve 14' in a first intermediate state. FIG. 7C is a cross-sectional view of isolation valve 14' in a second intermediate state. FIG. 7D is a cross-sectional view of isolation valve 14' in the connected state. FIGS. 7A-7D will be discussed together. Inlet module 20' and outlet module 22' of isolation valve 14' are shown.

Shuttle 28' (FIG. 7A); sleeve 30; stem 32"; inlet spring 34; inner seal 38a (FIG. 7A); inner seal 38b; and valve seal 40a of inlet module 20' are shown. Shuttle 28' includes inlet port 60 and shuttle bore 64. Sleeve 30 includes sleeve flange 68, sleeve body 130, sleeve bore 132, first sleeve end 134, second sleeve end 136, and sleeve taper 162 (FIG. 7D). Stem 32" includes first end 138", second end 140", stem ports 142", stem passage 143, stem flange 144", and stem taper 146".

Outlet module 22' includes base 70'; piston 72'; piston seals 74 (FIGS. 7A and 7B); piston seal retainer 76' (FIG. 7A); piston spring 78 (FIG. 7A); piston housing 80; seal retainer 84'; cartridge ring 86a'; wiper seals 88a, 88b; chamber seals 90a, 90b; end cap 92'; wash chamber 148; and boost member 172 (FIGS. 7A-7C). Base 70' includes outlet port 102 and piston bore 104'. Piston 72' includes piston head 106' and piston shaft 108' (FIGS. 7A and 7B). Piston shaft 108' includes receiving bore 150, piston taper 152' (FIG. 7A), and boost bore 174. Piston housing 80 includes boost port 109.

Isolation valve 14' is substantially similar to isolation valve 14 (best seen in FIGS. 2A-3D). Isolation valve 14' does not include soft seals at the interface between piston 72', stem 32", and sleeve 30. Inlet module 20' is fluidly connected to an upstream fluid source, such as main reservoir 12 (FIGS. 1A and 1B) or pump 16a (FIGS. 1A and 1B), among other options. Outlet module 22' is fluidly connected to a downstream fluid receiver, such as pumps 16a, 16b (FIGS. 1A and 1B) or applicator 18 (FIGS. 1A and 1B). Isolation valve 14' shifts between the isolated state, where gap 26 is disposed between inlet module 20' and outlet module 22', and the connected state, where inlet module 20' is mechanically and fluidly connected to outlet module 22'.

Shuttle 28' is formed as a single part. It is understood, however, that shuttle 28' can be formed from separate components joined together, similar to shuttle 28 (FIGS. 2A-3D). Stem 32" extends into shuttle bore 64. Second end 140" is attached to shuttle 28' within shuttle bore 64 and fluidly connected to inlet port 60. Stem 32" is cantilevered from shuttle 28' and extends through sleeve body 130. Stem taper 146" is disposed at the end of first end 138". Stem taper 146" encounters piston taper 152' and the interface therebetween aligns stem 32" within receiving bore 150 as stem 32" engages piston 72'. Stem taper 146" thereby assists in ensuring concentricity as inlet module 20' interfaces with outlet module 22'. Stem taper 146" can be of any desired configuration for interfacing with piston taper 152' and aligning stem 32" in receiving bore 150. For example, stem taper 146" can be an annular curved portion. In some examples, stem taper 146" can be hemispherical.

Stem passage 143 extends through stem 32" from second end 140" to stem ports 142". Stem ports 142" provides flowpaths for fluid to exit stem 32". First end 138" is disposed on a first side of stem ports 142" and second end 140" is disposed on a second side of stem ports 142" opposite first end 138". During operation, spray fluid enters stem passage 143 at second end 140" and flows through stem passage 143 to stem ports 142". In some examples, the fluid source connected to inlet port 60 is pressurized such that spray fluid is present in stem passage 143 both when isolation valve 14' is in the isolated state and when isolation valve 14' is in the connected state.

Sleeve flange 68 projects radially from sleeve body 130. First sleeve end 134 extends from sleeve flange 68 towards stem flange 144". Sleeve contour 162 is disposed at the distal end of first sleeve end 134. Sleeve contour 162 is configured to interface with stem flange 144" to close the flowpath through inlet module 20' and prevents fluid from flowing out of inlet module 20' between first sleeve end 134 and stem 32". Stem 32" and sleeve 30 interface to seal any fluid in inlet module 20' from atmosphere. Second sleeve end 136 extends from sleeve flange 68 towards shuttle 28'. Inlet spring 34 extends between shuttle 28' and sleeve flange 68 and is configured to bias sleeve 30 into contact with stem flange 144". Inlet spring 34 is disposed about second sleeve end 136.

Valve seal 40a is disposed on first end 138". Inner seal 38b is disposed on second end 140". Valve seal 40a is thus disposed on an opposite side of stem ports 142" from inner seal 38b. Both stem flange 144" and stem ports 142" are disposed between valve seal 40a and inner seal 38b. Stem flange 144" is disposed between stem seal groove 164a' and stem ports 142".

Base 70' is formed as a single part. It is understood, however, that base 70' can be formed from separate components joined together, similar to base 70 (FIGS. 2A-3D). Outlet port 102 extends into base 70' and provides an exit port for fluid to exit isolation valve 14'. Piston bore 104' extends axially through base 70' along axis A-A. Piston bore 104' includes portions having varying diameters to ensure proper alignment of elements within piston bore 104'. The central portion of piston bore 104' is disposed between chamber seals 90a, 90b and forms an outlet chamber for receiving spray fluid. The central portion has diameter D 11. A first portion of piston bore 104' extends from the central portion and is capped by end cap 92'. Cartridge ring 86a' is disposed in the first portion between part of base 70' and end cap 92'. The first portion includes two diameters, diameter D12 and diameter D13. The first portion has diameter D13 at the area defining wash chamber 148. D13 is larger than diameter D12. A second portion of piston bore 104' extends from the central portion and is capped by seal retainer 84'. The second portion has diameters D14 and D15. Diameter D15 is larger than diameter D14. Diameters D12, D13, D14, and D15 are larger than diameter D11. In some examples, D12 and D13 are the same diameter. In some examples, diameter D12 is the same as diameter D14. In some examples, diameter D13 is the same as diameter D15. It is understood however, that diameters D11-D15 can have any desired relationship.

Wiper seals 88a, 88b; cartridge ring 86a'; and chamber seals 90a, 90b are disposed in piston bore 104'. End cap 92' is attached to base 70'. End cap 92' retains wiper seal 88a, cartridge ring 86a', and chamber seal 90a in piston bore 104'. Cartridge ring 86a' is disposed between end cap 92' and base 70'. In the example shown, cartridge ring 86a' supports each of chamber seal 90a and wiper seal 88a. Cartridge ring 86a' includes windows to allows fluid flow into and out of wash chamber 148 defined by cartridge ring 86a'. Cartridge ring 86a' can be formed from two separate components, with a first component supporting cartridge seal 90a and a second component forming the windows into wash chamber 148 and supporting wiper seal 88a. In some examples, cartridge ring 86a' is formed from a single part. A portion of end cap 92' contacts cartridge ring 86a' to maintain cartridge ring 86a' in piston bore 104'.

Seal retainer 84' is attached to base 70' and encloses an end of piston bore 104' opposite end cap 92'. Seal retainer 84' retains wiper seal 88b and chamber seal 90b in piston bore 104'. In the example shown, each of wiper seal 88b and chamber seal 90b are disposed within and supported by seal retainer 84'. A flange is formed in seal retainer 84' to separate wiper seal 88b and chamber seal 86b.

Piston housing 80 is attached to an end of base 70' opposite end cap 92'. Piston head 106' is disposed in piston housing 80 and is movable within piston housing 80 along axis A-A. Piston shaft 108' extends from piston head 106' into piston bore 104'. Piston shaft 108' is movable within piston bore 104' along axis A-A. Piston seals 74 are disposed around piston head 106' and engage an inner wall of piston housing 80. Piston seal retainer 76' is attached to piston head 106' and retains piston seals 74 on piston head 106'. Piston seal retainer 76' includes a bore therethrough to allow boost member 172 to extend through piston seal retainer 76' into communication with boost bore 109.

Piston head 106' divides piston housing 80 into dry chamber 154 and wet chamber 156. Piston spring 78 is disposed in dry chamber 154 and is configured to bias piston 72' towards a position associated with the isolated state. Boost member 172 extends into piston housing 80 through boost port 109 and through piston seal retainer 76' into piston 72'. Boost member 172 is configured to provide pressurized fluid, such as compressed air or hydraulic fluid, to boost bore 174 to assist in driving piston 72' from the position associated with the connected state to the position associated with the isolated state. It is understood, however, that boost member 172 can provide any desired fluid suitable for driving piston 72'. Wet chamber 156 is fluidly connected to wash chamber 148 via flowpaths extending through base 70', as discussed in more detail above with regard to FIGS. 6A and 6B.

Isolation valve 14' is initially in the isolated state shown in FIG. 7A. In the isolated state, gap 26 is disposed between inlet module 20' and outlet module 22' to electrically isolate outlet module 22' and inlet module 20'. To initiate fluid flow through isolation valve 14', inlet module 20' is driven along axis A-A to the first intermediate state, shown in FIG. 7B. In the first intermediate state gap 26 is no longer disposed between inlet module 20' and outlet module 22'.

First end 138" enters receiving bore 150 as isolation valve 14' transitions to the first intermediate state. First contact is made between inlet module 20' and outlet module 22' in the first intermediate state. First end 138" enters receiving bore 150 of piston 72' and piston 72' contacts stem flange 144". As first end 138" enters receiving bore 150, valve seal 40a also enters receiving bore 150. Valve seal 40a is thus disposed in receiving bore 150 between stem 32" and piston 72'. Valve seal 40a provides a seal between stem 32" and piston 72 that prevents fluid from migrating into receiving bore 150.

Isolation valve 14' transitions from the first intermediate state to the second intermediate state, shown in FIG. 7C. Second contact is made between inlet module 20' when sleeve flange 68 contacts outlet module 22'. Specifically, sleeve flange 68 contacts and is braced against end cap 92' to inhibit further movement of sleeve 30 in direction R. It is understood, however, that sleeve flange 68 be braced in any desired manner. For example, sleeve flange 68 can directly contact another portion of outlet module 22', such as base 70', to prevent further movement of sleeve 30 in direction R.

As isolation valve 14' transitions to the second intermediate state, stem 32" pushes piston 72' in direction R. More specifically, stem flange 144" exerts a force on the end of piston 72' contacting stem flange 144" to push piston 72' in direction R. Piston 72' slides through wiper seal 88a, cartridge ring 86a', and chamber seal 90a. Sleeve 30 also slides through wiper seal 88a, cartridge ring 86a', and chamber seal 90a such that chamber seal 90a and wiper seal 88a seal against sleeve 30 with isolation valve 14' in the second intermediate state. Piston 72' shifting in direction R causes wet chamber 156 to increase in volume, thereby drawing wash fluid into wet chamber 156. Piston spring 78 compresses within dry chamber 154.

Isolation valve 14' transitions from the second intermediate state to the connected state, shown in FIG. 7D. With sleeve flange 68 braced against outlet module 22', sleeve 30 is prevented from moving in direction R as isolation valve 14' transitions from the second intermediate state to the connected state. Inlet spring 34 compresses between sleeve flange 68 and shuttle 28'. Stem 32" continues to move in direction R and drives piston 72' further in direction R. Stem 32" shifts relative to sleeve 30 such that stem ports 142" transition from inside of sleeve bore 132 to outside of sleeve bore 132. Inner seal 38b slides within sleeve bore 132 and maintains a seal between sleeve 30 and stem 32" to prevent fluid from migrating between sleeve 30 and stem 32".

Stem ports 142" are exposed within piston bore 104'. Stem ports 142" are oriented to direct the fluid flow radially outward and into outlet module 22'. Stem ports 142" being exposed within piston bore 104' opens a flowpath between inlet port 60 and outlet port 102. Isolation valve 14' is thus open and can provide fluid to a downstream component. The fluid enters isolation valve 14' through inlet port 60, flows through the flowpath in shuttle 28' to stem 32", flows through stem passage 143 and enters piston bore 104' through stem ports 142", and flows downstream out of outlet module 22' through outlet port 102. Sleeve taper 162' and stem flange 144" are shaped such that sleeve taper 162' and stem flange 144" form an extension of stem ports 142" with isolation valve 14' in the connected state. Stem ports 142" and the extended path between sleeve taper 162' and stem flange 144" turn the spray fluid from an axial flow to provide a transition to the flowpath through base 70' to outlet port 102.

Isolation valve 14' shifts from the connected state to the isolated state to stop flow and electrically isolate inlet module 20' and outlet module 22'. Isolation valve 14' initially transitions from the connected state to the second intermediate state. As inlet module 20' is pulled in direction F, stem 32" is pulled in direction F due to the connection to shuttle 28' such that stem 32" retracts within sleeve bore 132. Stem ports 142" transition back into sleeve 30 and are covered by sleeve 30. Sleeve 30 contacts and seals against stem flange 144". Sleeve 30 covering stem ports 142" and contacting stem flange 144" closes the flowpath through inlet module 20' and prevents fluid from exiting inlet module 20'. As such, the fluid within inlet module 20' is sealed from atmosphere by the interface between sleeve 30 and stem flange 144".

As isolation valve 14' transitions to the second intermediate state, inlet spring 34 maintains sleeve 30 in the position associated with the connected state to ensure that stem 32" is fully retracted within sleeve 30. Piston spring 78 and/or pressurized fluid provided through boost member 172 push piston 72' in direction F to maintain contact between piston 72' and stem flange 144" as stem 32" shifts in direction F.

Isolation valve 14' transitions from the second intermediate state to the first intermediate state. Each of piston 72' and sleeve 30 maintain contact with stem flange 144" as isolation valve 14' transitions to the first intermediate state. Sleeve 30 and piston 72' each shift in direction F through cartridge ring 86a' and wiper seal 88a. Piston 72' reengages with wiper seal 88a and chamber seal 90a to seal any fluid in outlet module 22' from atmosphere.

As piston 72' shifts in direction F, the volume of wet chamber 156 decreases and piston head 106' pumps wash fluid downstream to wash chamber 148 from wet chamber 156. Wash fluid driven into wash chamber 148 by piston 72' cleans those portions of isolation valve 14' passing through wash chamber 148, thereby washing spray fluid from those portions. Wiper seal 88a wipes the exterior of the components passing through wiper seal 88a to remove any residual fluid. Piston spring 78 and/or the pressurized fluid provided through boost member 172 drive piston 72' in direction F and ensure that piston 72' maintains contact with stem flange 144" throughout the transition to the first intermediate state. While isolation valve 14' is described as including both piston spring 78 and boost member 172, it is understood that, in some examples, isolation valve 14' includes only one or the other of piston spring 78 and boost member 172.

Isolation valve 14' then transitions from the first intermediate state to the isolated state. First end 138" of stem 32" is withdrawn from receiving bore 150' of piston 72'. Piston 72' disengages from stem flange 144". As such, inlet module 20' and outlet module 22' are not in contact and gap 26 is reformed between inlet module 20' and outlet module 22'. Inlet module 20' continues to transition away from outlet module 22' until gap 26 is of a sufficient size to electrically isolate inlet module 20' from outlet module 22'. Isolation valve 14' thus provides electrical isolation between earth ground potential P (FIGS. 1A and 1B) and any electrically charged components during spraying.

Isolation valve 14' provides significant advantages. Isolation valve 14' allows fluid flow when in the connected state and stops fluid flow when not in the connected state, without requiring the use of tools or other hardware. Isolation valve 14' prevents fluid from being exposed to the atmosphere and provides a physical isolation gap 26 when in the isolated state. This is especially useful when moving water-based fluids that are electrically charged, such as in an electrostatic spray system similar to electrostatic spray system 10. Isolation valve 14' does not include any ball/seat check valves to seal fluid from atmosphere. Instead, stem 32" and sleeve 30' interface to seal fluid from atmosphere in inlet module 20' and piston 72' interfaces with chamber seal 90a and chamber seal 90b to seal spray fluid in outlet module 22' from atmosphere. In addition, the connecting geometry of stem 32", sleeve 30, and piston 72' ensures concentricity and proper alignment as isolation valve 14' transitions into the connected state. There are no springs or other difficult to access and clean components in the fluid flow path between inlet port 60 and outlet port 102.

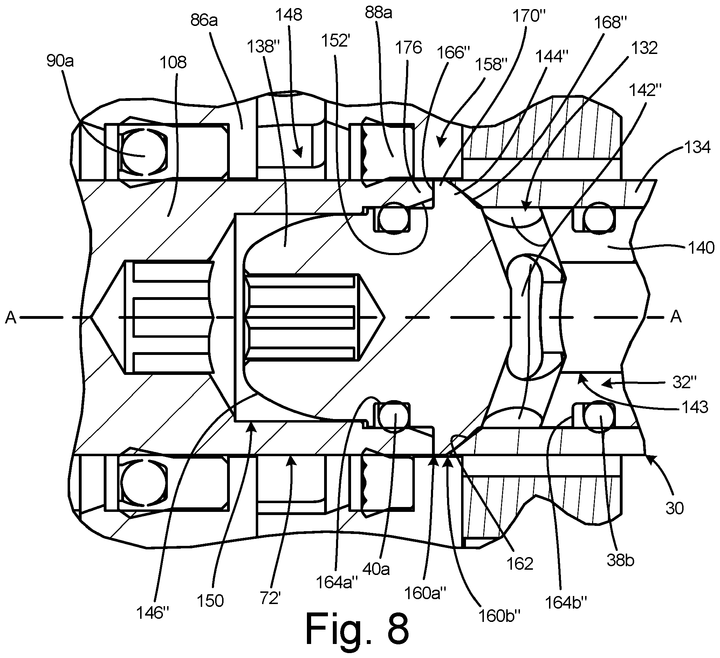

FIG. 8 is an enlarged view of detail 8 in FIG. 7B. Interface 158" between sleeve 30, stem 32", and piston 72' is shown. First sleeve end 134, sleeve bore 132, and sleeve taper 162 of sleeve 30 are shown. First end 138", second end 140", stem ports 142", stem flowpath 143, stem flange 144", and stem seal grooves 164a", 164b" of stem 32" are shown. Stem flange 144" includes first flange side 166", second flange side 168", and free end 170". Distal end 176 of piston shaft 108' of piston 72' is shown.

Seams 160a", 160b" are formed at interface 158" between sleeve 30, stem 32", and piston 72'. Interface 158" is a double seam interface in that seam 160a" is formed at the interface between piston 72' and first flange side 166" and seam 160b" is formed at the interface between sleeve 30 and second flange side 168". Hard seals are formed at interface 158" between sleeve 30 and stem flange 144" and between piston 72' and stem flange 144". The seals are hard seals in that no soft seals, such as elastomeric o-rings, are disposed directly at interface 158".

Stem flange 144" projects generally radially from stem 32". First flange side 166" is flat and projects radially relative to axis A-A. Second flange side 168" is contoured between stem port 142" and free end 170" such that second flange side 168" extends both radially and axially. In some examples, second flange side 168" can be flat. In other examples, second flange side 168" can be curved.

Stem seal grooves 164a", 164b" are disposed annularly about stem 32" on opposite sides of stem ports 142". Valve seal 40a and inner seal 38b are disposed in stem seal grooves 164a", 164b", respectively. Valve seal 40a is disposed on first end 138". Inner seal 38b is disposed on second end 140". Both stem flange 144" and stem ports 142" are disposed between valve seal 40a and inner seal 38b. Stem flange 144" is disposed between stem seal groove 164a" and stem ports 142".

Distal end 176 of piston 72' includes a flat face configured to mate with and seal against first flange side 166". While each of first flange side 166" and distal end 176 are described as flat and radially-extending, it is understood that first flange side 166" and distal end 176 can be of any suitable configuration for forming a hard seal between distal end 176 and stem flange 144".

Sleeve taper 162 is disposed at the end of sleeve 30 and is configured to mate with and seal against second flange side 168". Sleeve taper 162 interfacing with second flange side 168" forms a fluid-tight hard seal between sleeve 30 and stem 32'. In the example shown, a radially-outer portion of sleeve taper 162 interfaces with and seats on second flange side 168" while a radially-inner portion of sleeve taper 162 is spaced from second flange side 168". It is understood, however, that sleeve taper 162 can be of any configuration suitable for forming a fluid-tight seal with second flange side 168".

During operation, seams 160a", 160b" shift in direction R and pass through each of wiper seal 88a, cartridge ring 86a', and chamber seal 90a, respectively, as isolation valve 14' (best seen in FIGS. 7A-7D) transitions from the first intermediate state to the connected state. Seams 160a", 160b" shifts in direction F and passes through each of chamber seal 90a, cartridge ring 86a', and wiper seal 88a, respectively, as isolation valve 14' transitions to the first intermediate state from the connected state.

Stem taper 146" interfaces with piston taper 152' as isolation valve 14' initially enters the first intermediate state from the isolated state. Piston taper 152' is configured to contact stem taper 146" and guide first end 138" into receiving bore 150. Piston taper 152' and stem taper 146" interfacing facilitates alignment of stem 32' and piston 72' on axis A-A to assist in ensuring concentricity between stem 32' and piston 72'.

Stem flange 144" directly contacts distal end 176 of piston 72' to exert a pushing force on piston 72' as isolation valve 14' transitions to the connected state. Stem flange 144" exerts the force on piston 72' to drive piston 72' in direction R. Seams 160a", 160b" shift in direction R and pass through wiper seal 88a, cartridge ring 86a', and chamber seal 90a. As isolation valve 14' transitions from the second intermediate state (FIG. 7C) to the connected state (FIG. 7D) sleeve 30 disengages from second flange side 168". Sleeve 30 disengaging from second flange side 168" opens a flowpath between sleeve 30 and stem flange 144" that allows fluid to exit inlet module 20' (best seen in FIGS. 7A-7D) through that flowpath.

To shut off flow, stem 32" is pulled rearward and sleeve 30 reengages with second flange side 168". Sleeve 30 engaging second flange side 168" forms a fluid tight seal between sleeve 30 and stem flange 144", thereby closing the flowpath and preventing additional fluid from exiting inlet module 20'. As isolation valve 14' transitions to the isolated state, interface 158" passes through wash chamber 148 within the outlet module 22'. As discussed in more detail in FIGS. 6A and 6B, wash fluid is pumped through wash chamber 148 as piston 72' shifts in direction F. The wash fluid cleans seams 160a", 160b" to remove any residual spray fluid from seams 160a", 160b". After interface 158" passes through wash chamber 148 wiper seal 88a removes any residual fluid from interface 158". Piston 72' reengages with each of chamber seal 90a and wiper seal 88a to seal the fluid passages within base 70' from atmosphere. Distal end 176 disengages from first flange side 166" as isolation valve 14 transitions to the isolated state.

### Discussion of Non-Exclusive Embodiments

The following are non-exclusive descriptions of possible embodiments of the present invention.

An isolation valve includes an inlet module, an outlet module, and an actuating module. The inlet module includes a stem extending from a shuttle and including an internal flowpath extending from a first end of the stem connected to the shuttle to a fluid port through the stem; and a sleeve disposed around the stem and movable relative to the stem. The fluid port is disposed within the sleeve with the inlet module in the isolated state and the fluid port is disposed outside of the sleeve with the inlet module in the connected state. The outlet module includes a piston at least partially disposed within a piston bore through the outlet module. The actuating module is configured to actuate the isolation valve between an isolated state, where the inlet module is spaced from the outlet module such that a gap is disposed between the inlet module and the outlet module, and a connected state, where the inlet module is mechanically and fluidly connected to the outlet module.

The isolation valve of the preceding paragraph can optionally include, additionally and/or alternatively, any one or more of the following features, configurations and/or additional components:
The inlet module includes an inlet spring disposed between the sleeve and the shuttle.

The sleeve includes a sleeve flange projecting radially from the sleeve, and wherein the inlet spring interfaces with the sleeve flange.

The stem further includes a stem flange projecting radially from the stem, the piston contacts a first side of the stem flange with the isolation valve in the connected state, and the sleeve contacts a second side of the stem flange with the isolation valve in the isolated state.

The sleeve includes a tapered sleeve face and the second side of the stem flange includes a tapered flange face, wherein the tapered sleeve face contacts and seals against the tapered flange face.

The piston includes a flat piston face and the first side of the stem flange includes a flat flange face, wherein the flat piston face contacts and seals against the flat flange face with the isolation valve in the connected state.

A first dynamic seal disposed on the first side of the stem flange, wherein the piston contacts the first dynamic seal with the isolation valve in the connected state; and a second dynamic seal disposed on the second side of the stem flange, wherein the sleeve contacts the second dynamic seal with the isolation valve in the isolated state.

The first dynamic seal is disposed on a first side of the fluid port and the second dynamic seal is disposed on a second side of the fluid port such that the fluid port is disposed between the first dynamic seal and the second dynamic seal.

Each of the first dynamic seal and the second dynamic seal are disposed on a second end of the stem, and wherein the fluid port extends through the stem at a location between the first end and both of the first dynamic seal and the second dynamic seal such that each of the first dynamic seal and the second dynamic seal are disposed on the same side of the fluid port.

An interface between the piston, the sleeve, and the stem flange includes a single seam, one of the piston and the sleeve extends over a free end of the stem flange and contacts the other one of the piston and the sleeve, and the single seam is formed between the piston and the sleeve.

An interface between the piston, the sleeve, and the stem flange includes a double seam, the piston projects over a first dynamic seal disposed on the first side of the stem flange and contacts the first side of the stem flange, and the sleeve projects over a second dynamic seal disposed on the second side of the stem flange and contacts the second side of the flange.

The piston includes a piston head disposed in a piston housing attached to the outlet module, wherein the piston head divides the piston housing into a wet chamber and a dry chamber; and a piston shaft extending from the piston head and into the piston bore, the piston shaft including a receiving bore configured to receive a second end of the stem disposed opposite the first end of the stem. The outlet module includes a wash inlet port fluidly connected to the wet chamber to provide wash fluid to the wet chamber. The outlet module includes a wash outlet port fluidly connected to the wet chamber to receive wash fluid from the wet chamber and eject the wash fluid from the outlet module.

The piston is driven through a suction stroke by the inlet module as the isolation valve shifts from the isolated state to the connected state and the piston is driven through a pumping stroke as the isolation valve shifts from the connected state to the isolated state. The piston draws wash fluid into the wet chamber through the wash inlet port during the suction stroke. The piston pumps wash fluid from the wet chamber through the wash outlet port as the piston shifts through the pumping stroke.

The stem directly contacts the piston to exert a force on the piston and push the piston from a forward position associated with the isolated state to a rearward position associated with the connected state, thereby driving the piston through the suction stroke.

An outlet chamber defined within the piston bore; a wiper seal disposed within the piston bore on an inlet module side of the outlet chamber. The sleeve passes through the wiper seal as the sleeve enters and exits the piston bore. The piston contacts the wiper seal with the isolation valve in the isolated state and the sleeve contacts the wiper seal with the isolation valve in the connected state.

A cartridge ring disposed within the piston bore between the wiper seal and the outlet chamber. The cartridge ring defines a wash chamber through which the piston pumps wash fluid as the isolation valve transitions from the connected state to the isolated state.

No springs are disposed in a flowpath extending from the inlet port of the inlet module, through the stem, and to the outlet port of the outlet module.

An electrostatic spraying system includes a reservoir configured to store a supply of a spray fluid, wherein the reservoir is connected to earth ground potential; an applicator configured to be charged and to spray the spray fluid onto a surface; and the isolation valve disposed between the reservoir and the applicator, wherein the inlet module is fluidly connected to the reservoir and the outlet module is fluidly connected to the applicator.

A method includes driving an isolation valve in a first direction from an isolated state, where an inlet module is spaced from an outlet module such that a gap is formed therebetween, to a first intermediate state, where contact is made between a stem of the inlet module and a piston of the outlet module; driving the isolation valve in the first direction from the first intermediate state to a second intermediate state, where contact is made between a sleeve through which the stem extends and the outlet module such that the sleeve is braced against the outlet module to prevent further movement of the sleeve in the first direction; driving the isolation valve in the first direction from the second intermediate state to a connected state, wherein the stem shifts relative to the piston as the isolation valve transitions to the connected state such that a fluid port through the stem is uncovered within the outlet module thereby opening a flowpath through the stem between an inlet port of the inlet module and an outlet port of the outlet module; and driving the isolation valve from the connected state to the second intermediate state, from the second intermediate state to the first intermediate state, and from the first intermediate state to the isolated state.

The method of the preceding paragraph can optionally include, additionally and/or alternatively, any one or more of the following features, configurations and/or additional components:
Drawing, with the piston, wash fluid into a wet chamber of the outlet module as the isolation valve transitions from the first intermediate state to the connected state; and driving, with the piston, the wash fluid into a wash chamber through which an interface between the stem, the sleeve, and the piston passes as the isolation valve shifts from the connected state to the first intermediate state.

## Claims

1. An isolation valve (14) comprising:
an inlet module (20) comprising:
a stem (32) extending from a shuttle (28) and including an internal flowpath extending from a first end of the stem (32) connected to the shuttle (28) to a fluid port through the stem (32); and
a sleeve (30) disposed around the stem (32) and movable relative to the stem (32);
wherein the fluid port is disposed within the sleeve (30) with the inlet module (20) in an isolated state and the fluid port is disposed outside of the sleeve (30) with the inlet module (20) in a connected state; and
an outlet module (22a) having a piston (72) at least partially disposed within a piston bore through the outlet module; and
an actuating module (24a) configured to actuate the isolation valve (14) between the isolated state, where the inlet module (20a) is spaced from the outlet module(22a) such that a gap (26a) is disposed between the inlet module and the outlet module, and the connected state, where the inlet module is mechanically and fluidly connected to the outlet module.

2. The isolation valve of claim 1, wherein the inlet module (20) further comprises:
an inlet spring (34) disposed between the sleeve (30) and the shuttle (28);
wherein the sleeve (30) includes a sleeve flange (68) projecting radially from the sleeve (30); and
wherein the inlet spring (34) interfaces with the sleeve flange (68).

3. The isolation valve of claim 1 or claim 2, wherein the stem (32) further comprises:
a stem flange (144) projecting radially from the stem (32);
wherein the piston (72) contacts a first side (166) of the stem flange (144) with the isolation valve (14) in the connected state; and
wherein the sleeve (30) contacts a second side (168) of the stem flange (144) with the isolation valve (14) in the isolated state.

4. The isolation valve of claim 3, wherein the sleeve (30) includes a tapered sleeve face and the second side of the stem flange (144) includes a tapered flange face, wherein the tapered sleeve face contacts and seals against the tapered flange face.

5. The isolation valve of claim 3 or claim 4, wherein the piston (72) includes a flat piston face and the first side of the stem flange (144) includes a flat flange face, wherein the flat piston face contacts and seals against the flat flange face with the isolation valve (14) in the connected state.

6. The isolation valve of any one of claims 3 to 5, further comprising:
a first dynamic seal disposed on the first side of the stem flange (144), wherein the piston (72) contacts the first dynamic seal with the isolation valve (14) in the connected state; and
a second dynamic seal disposed on the second side of the stem flange (144), wherein the sleeve (30) contacts the second dynamic seal with the isolation valve (14) in the isolated state.

7. The isolation valve of any one of claims 3 to 6, wherein:
an interface between the piston (72), the sleeve (30), and the stem flange (144) includes a single seam;
one of the piston (72) and the sleeve (30) extends over a free end of the stem flange (144) and contacts the other one of the piston (72) and the sleeve (30); and
the single seam is formed between the piston (72) and the sleeve (30).

8. The isolation valve of any one of claims 3 to 7, wherein:
an interface between the piston (72), the sleeve (30), and the stem flange (144) includes a double seam;
the piston (72) projects over a first dynamic seal disposed on the first side of the stem flange (144) and contacts the first side of the stem flange (144); and
the sleeve (30) projects over a second dynamic seal disposed on the second side of the stem flange (144) and contacts the second side of the flange.

9. The isolation valve of any one of the preceding claims, wherein the piston comprises:
a piston head (106) disposed in a piston housing (80) attached to the outlet module (22), wherein the piston head (106) divides the piston housing (80) into a wet chamber and a dry chamber; and
a piston shaft (108) extending from the piston head (106) and into the piston bore (104), the piston shaft (108) including a receiving bore configured to receive a second end of the stem (32) disposed opposite the first end of the stem (32);
wherein the outlet module (22) includes a wash inlet port (100a) fluidly connected to the wet chamber to provide wash fluid to the wet chamber; and
wherein the outlet module includes a wash outlet port (100b) fluidly connected to the wet chamber to receive wash fluid from the wet chamber and eject the wash fluid from the outlet module.

10. The isolation valve of claim 9, wherein:
the piston (72) is driven through a suction stroke by the inlet module as the isolation valve (14) shifts from the isolated state to the connected state and the piston is driven through a pumping stroke as the isolation valve (14) shifts from the connected state to the isolated state;
the piston (72) draws wash fluid into the wet chamber through the wash inlet port during the suction stroke; and
the piston (72) pumps wash fluid from the wet chamber through the wash outlet port as the piston shifts through the pumping stroke.

11. The isolation valve of any one of the preceding claims, further comprising:
an outlet chamber defined within the piston bore;
a wiper seal disposed within the piston bore on an inlet module side of the outlet chamber; and
a cartridge ring disposed within the piston bore between the wiper seal and the outlet chamber;
wherein the sleeve passes through the wiper seal as the sleeve enters and exits the piston bore;
wherein the piston contacts the wiper seal with the isolation valve in the isolated state and the sleeve contacts the wiper seal with the isolation valve in the connected state; and
wherein the cartridge ring defines a wash chamber through which the piston pumps wash fluid as the isolation valve transitions from the connected state to the isolated state.

12. The isolation valve of any one of the preceding claims, wherein no springs are disposed in a flowpath extending from the inlet port of the inlet module (20), through the stem (32), and to the outlet port of the outlet module (22a).

13. An electrostatic spraying system comprising:
a reservoir (12) configured to store a supply of a spray fluid, wherein the reservoir (12) is connected to earth ground potential;
an applicator (18) configured to be charged and to spray the spray fluid onto a surface; and
the isolation valve (14) of any preceding claim disposed between the reservoir (12) and the applicator (18), wherein the inlet module (20) is fluidly connected to the reservoir (12) and the outlet module (22a) is fluidly connected to the applicator (18).

14. A method comprising:
driving an isolation valve (14) in a first direction from an isolated state, where an inlet module (20) is spaced from an outlet module (22a) such that a gap (26a) is formed therebetween, to a first intermediate state, where contact is made between a stem (32) of the inlet module (20) and a piston (72) of the outlet module (22a);
driving the isolation valve (14) in the first direction from the first intermediate state to a second intermediate state, where contact is made between a sleeve (30) through which the stem (32) extends and the outlet module (22a) such that the sleeve (30) is braced against the outlet module (22a) to prevent further movement of the sleeve (30) in the first direction;
driving the isolation valve (14) in the first direction from the second intermediate state to a connected state, wherein the stem (32) shifts relative to the sleeve (30) as the isolation valve (14) transitions to the connected state such that a fluid port through the stem (32) is uncovered within the outlet module (22a) thereby opening a flowpath through the stem (32) between an inlet port of the inlet module (20) and an outlet port of the outlet module (22a); and
driving the isolation valve (14) from the connected state to the second intermediate state, from the second intermediate state to the first intermediate state, and from the first intermediate state to the isolated state.

15. The method of claim 14, further comprising:
drawing, with the piston (72), wash fluid into a wet chamber of the outlet module (22a) as the isolation valve (14) transitions from the first intermediate state to the connected state; and
driving, with the piston (72), the wash fluid into a wash chamber through which an interface between the stem (32), the sleeve (30), and the piston (72) passes as the isolation valve (14) shifts from the connected state to the first intermediate state.

## Patentansprüche

1. Absperrventil (14), das umfasst:
ein Einlassmodul (20), das umfasst:
einen Schaft (32), der sich von einem Shuttle (28) aus erstreckt und einen internen Strömungspfad aufweist, der sich von einem ersten Ende des Schafts (32), das mit dem Shuttle (28) verbunden ist, zu einem Fluidport durch den Schaft (32) hindurch erstreckt; und
eine Hülse (30), die um den Schaft (32) herum angeordnet und relativ zu dem Schaft (32) beweglich ist;
wobei der Fluidport innerhalb der Hülse (30) angeordnet ist, wenn sich das Einlassmodul (20) in einem abgesperrten Zustand befindet, und der Fluidport außerhalb der Hülse (30) angeordnet ist, wenn sich das Einlassmodul (20) in einem verbundenen Zustand befindet; und
ein Auslassmodul (22a), das einen Kolben (72) aufweist, der mindestens teilweise innerhalb einer Kolbenbohrung durch das Auslassmodul hindurch angeordnet ist; und ein Betätigungsmodul (24a), das dafür konfiguriert ist, das Absperrventil (14) zwischen dem abgesperrten Zustand, in dem das Einlassmodul (20a) von dem Auslassmodul (22a) so beabstandet ist, dass sich ein Spalt (26a) zwischen dem Einlassmodul und dem Auslassmodul befindet, und dem verbundenen Zustand, in dem das Einlassmodul mechanisch und fluidisch mit dem Auslassmodul verbunden ist, zu betätigen.

2. Absperrventil nach Anspruch 1, wobei das Einlassmodul (20) des Weiteren umfasst:
eine Einlassfeder (34), die zwischen der Hülse (30) und dem Shuttle (28) angeordnet ist;
wobei die Hülse (30) einen Hülsenflansch (68) aufweist, der radial von der Hülse (30) absteht; und
wobei die Einlassfeder (34) an dem Hülsenflansch (68) anliegt.

3. Absperrventil nach Anspruch 1 oder Anspruch 2, wobei der Schaft (32) des Weiteren umfasst:
einen Schaftflansch (144), der radial von dem Schaft (32) absteht;
wobei der Kolben (72) eine erste Seite (166) des Schaftflansches (144) kontaktiert, wenn sich das Absperrventil (14) im verbundenen Zustand befindet; und wobei die Hülse (30) eine zweite Seite (168) des Schaftflansches (144) kontaktiert, wenn sich das Absperrventil (14) im abgesperrten Zustand befindet.

4. Absperrventil nach Anspruch 3, wobei die Hülse (30) eine konische Hülsenfläche aufweist und die zweite Seite des Schaftflansches (144) eine konische Flanschfläche aufweist, wobei die konische Hülsenfläche die konische Flanschfläche kontaktiert und gegen sie abdichtet.

5. Absperrventil nach Anspruch 3 oder Anspruch 4, wobei der Kolben (72) eine flache Kolbenfläche aufweist und die erste Seite des Schaftflansches (144) eine flache Flanschfläche aufweist, wobei die flache Kolbenfläche die flache Flanschfläche kontaktiert und gegen sie abdichtet, wenn sich das Absperrventil (14) im verbundenen Zustand befindet.

6. Absperrventil nach einem der Ansprüche 3 bis 5, das des Weiteren umfasst:
eine erste dynamische Dichtung, die auf der ersten Seite des Schaftflansches (144) angeordnet ist, wobei der Kolben (72) die erste dynamische Dichtung kontaktiert, wenn sich das Absperrventil (14) im verbundenen Zustand befindet; und
eine zweite dynamische Dichtung, die auf der zweiten Seite des Schaftflansches (144) angeordnet ist, wobei die Hülse (30) die zweite dynamische Dichtung kontaktiert, wenn sich das Absperrventil (14) im abgesperrten Zustand befindet.

7. Absperrventil nach einem der Ansprüche 3 bis 6, wobei:
eine Berührungsfläche zwischen dem Kolben (72), der Hülse (30) und dem Schaftflansch (144) eine Einzelnaht aufweist;
eines von dem Kolben (72) und der Hülse (30) sich über ein freies Ende des Schaftflansches (144) erstreckt und das andere von dem Kolben (72) und der Hülse (30) kontaktiert; und
die Einzelnaht zwischen dem Kolben (72) und der Hülse (30) ausgebildet ist.

8. Absperrventil nach einem der Ansprüche 3 bis 7, wobei:
eine Berührungsfläche zwischen dem Kolben (72), der Hülse (30) und dem Schaftflansch (144) eine Doppelnaht aufweist;
der Kolben (72) über eine erste dynamische Dichtung, die auf der ersten Seite des Schaftflansches (144) angeordnet ist, vorsteht und die erste Seite des Schaftflansches (144) kontaktiert; und
die Hülse (30) über eine zweite dynamische Dichtung, die auf der zweiten Seite des Schaftflansches (144) angeordnet ist, vorsteht und die zweite Seite des Flansches kontaktiert.

9. Absperrventil nach einem der vorangehenden Ansprüche, wobei der Kolben umfasst:
einen Kolbenkopf (106), der in einem Kolbengehäuse (80) angeordnet ist, das an dem Auslassmodul (22) angebracht ist, wobei der Kolbenkopf (106) das Kolbengehäuse (80) in eine Nasskammer und eine Trockenkammer unterteilt; und
einen Kolbenschaft (108), der sich von dem Kolbenkopf (106) aus und in die Kolbenbohrung (104) hinein erstreckt, wobei der Kolbenschaft (108) eine Aufnahmebohrung aufweist, die dafür konfiguriert ist, ein zweites Ende des Schaftes (32) aufzunehmen, das gegenüber dem ersten Ende des Schaftes (32) angeordnet ist;
wobei das Auslassmodul (22) einen Spüleinlassport (100a) aufweist, der mit der Nasskammer in Strömungsverbindung steht, um der Nasskammer Spülfluid zuzuführen; und
wobei das Auslassmodul einen Spülauslassport (100b) aufweist, der mit der Nasskammer in Strömungsverbindung steht, um Spülfluid aus der Nasskammer zu empfangen und das Spülfluid aus dem Auslassmodul auszustoßen.

10. Absperrventil nach Anspruch 9, wobei:
der Kolben (72) mittels eines Saughubes durch das Einlassmodul angetrieben wird, wenn das Absperrventil (14) vom abgesperrten Zustand in den verbundenen Zustand wechselt, und der Kolben mittels eines Pumphubes angetrieben wird, wenn das Absperrventil (14) vom verbundenen Zustand in den abgesperrten Zustand wechselt;
der Kolben (72) während des Saughubes Spülfluid durch den Spüleinlassport hindurch in die Nasskammer hinein saugt; und
der Kolben (72) Spülfluid aus der Nasskammer durch den Spülauslassport hindurch pumpt, wenn sich der Kolben aufgrund des Pumphubes verschiebt.

11. Absperrventil nach einem der vorangehenden Ansprüche, das des Weiteren umfasst:
eine Auslasskammer, die innerhalb der Kolbenbohrung definiert ist;
eine Abstreifdichtung, die innerhalb der Kolbenbohrung auf einer Einlassmodulseite der Auslasskammer angeordnet ist; und
einen Kartuschenring, der innerhalb der Kolbenbohrung zwischen der Abstreifdichtung und der Auslasskammer angeordnet ist;
wobei die Hülse durch die Abstreifdichtung hindurch verläuft, wenn die Hülse in die Kolbenbohrung eintritt und aus ihr austritt;
wobei der Kolben die Abstreifdichtung kontaktiert, wenn sich das Absperrventil im abgesperrten Zustand befindet, und die Hülse die Abstreifdichtung kontaktiert, wenn sich das Absperrventil im verbundenen Zustand befindet; und
wobei der Kartuschenring eine Spülkammer definiert, durch die der Kolben Spülfluid hindurchpumpt, wenn das Absperrventil vom verbundenen Zustand in den abgesperrten Zustand übergeht.

12. Absperrventil nach einem der vorangehenden Ansprüche, wobei keine Federn in einem Strömungspfad angeordnet sind, der sich von dem Einlassport des Einlassmoduls (20) durch den Schaft (32) hindurch und zu dem Auslassport des Auslassmoduls (22a) erstreckt.

13. Elektrostatisches Spritzsystem, das umfasst:
einen Vorratsbehälter (12), der dafür konfiguriert ist, einen Vorrat eines Spritzfluids zu speichern, wobei der Vorratsbehälter (12) mit einem Erdungspotenzial verbunden ist;
einen Applikator (18), der dafür konfiguriert ist, geladen zu werden und das Spritzfluid auf eine Oberfläche zu spritzen; und
das Absperrventil (14) nach einem der vorangehenden Ansprüche, das zwischen dem Vorratsbehälter (12) und dem Applikator (18) angeordnet ist, wobei das Einlassmodul (20) mit dem Vorratsbehälter (12) in Strömungsverbindung steht und das Auslassmodul (22a) mit dem Applikator (18) in Strömungsverbindung steht.

14. Verfahren, das umfasst:
Antreiben eines Absperrventils (14) in einer ersten Richtung aus einem abgesperrten Zustand, in dem ein Einlassmodul (20) von einem Auslassmodul (22a) so beabstandet ist, dass ein Spalt (26a) dazwischen gebildet wird, in einen ersten Zwischenzustand, in dem ein Kontakt zwischen einem Schaft (32) des Einlassmoduls (20) und einem Kolben (72) des Auslassmoduls (22a) hergestellt wird;
Antreiben des Absperrventils (14) in der ersten Richtung aus dem ersten Zwischenzustand in einen zweiten Zwischenzustand, wobei ein Kontakt zwischen einer Hülse (30), durch die sich der Schaft (32) hindurch erstreckt, und dem Auslassmodul (22a) so hergestellt wird, dass die Hülse (30) an das Auslassmodul (22a) angelegt wird, um eine weitere Bewegung der Hülse (30) in der ersten Richtung zu verhindern;
Antreiben des Absperrventils (14) in der ersten Richtung aus dem zweiten Zwischenzustand in einen verbundenen Zustand, wobei sich der Schaft (32) relativ zu der Hülse (30) verschiebt, wenn das Absperrventil (14) in den verbundenen Zustand übergeht, dergestalt, dass ein Fluidport durch den Schaft (32) hindurch innerhalb des Auslassmoduls (22a) freigelegt wird, wodurch ein Strömungspfad durch den Schaft (32) hindurch zwischen einem Einlassport des Einlassmoduls (20) und einem Auslassport des Auslassmoduls (22a) geöffnet wird; und
Antreiben des Absperrventils (14) aus dem verbundenen Zustand in den zweiten Zwischenzustand, aus dem zweiten Zwischenzustand in den ersten Zwischenzustand, und aus dem ersten Zwischenzustand in den abgesperrten Zustand.

15. Verfahren nach Anspruch 14, das des Weiteren umfasst:
Saugen, mit dem Kolben (72), von Spülfluid in eine Nasskammer des Auslassmoduls (22a) hinein, wenn das Absperrventil (14) von dem ersten Zwischenzustand in den verbundenen Zustand übergeht; und
Treiben, mit dem Kolben (72), des Spülfluids in eine Spülkammer hinein, durch die eine Berührungsfläche zwischen dem Schaft (32), der Hülse (30) und dem Kolben (72) hindurch verläuft, wenn das Absperrventil (14) von dem verbundenen Zustand in den ersten Zwischenzustand wechselt.

## Revendications

1. Vanne d'isolement (14) comprenant :
un module d'entrée (20) comprenant :
une tige (32) s'étendant depuis une navette (28) et comprenant un trajet d'écoulement interne s'étendant depuis une première extrémité de la tige (32) reliée à la navette (28) vers un orifice de fluide à travers la tige (32) ; et
un manchon (30) disposé autour de la tige (32) et mobile par rapport à la tige (32);
dans laquelle l'orifice de fluide est disposé à l'intérieur du manchon (30) avec le module d'entrée (20) dans un état isolé et l'orifice de fluide est disposé à l'extérieur du manchon (30) avec le module d'entrée (20) dans un état raccordé ; et
un module de sortie (22a) comportant un piston (72) au moins partiellement disposé à l'intérieur d'un alésage de piston à travers le module de sortie ; et
un module d'actionnement (24a) configuré pour actionner la vanne d'isolement (14) entre l'état isolé, où le module d'entrée (20a) est espacé du module de sortie (22a) de sorte qu'un espace (26a) soit disposé entre le module d'entrée et le module de sortie, et l'état raccordé, où le module d'entrée est raccordé mécaniquement et fluidiquement au module de sortie.

2. Vanne d'isolement selon la revendication 1, dans laquelle le module d'entrée (20) comprend en outre:
un ressort d'admission (34) disposé entre le manchon (30) et la navette (28) ;
dans laquelle le manchon (30) comprend une bride de manchon (68) dépassant en saillie radialement depuis le manchon (30) ; et
dans laquelle le ressort d'entrée (34) s'interface avec la bride de manchon (68).

3. Vanne d'isolement selon la revendication 1 ou la revendication 2, dans laquelle la tige (32) comprend en outre :
une bride de tige (144) dépassant en saillie radialement depuis la tige (32) ; dans laquelle le piston (72) entre en contact avec un premier côté (166) de la bride de tige (144) avec la vanne d'isolement (14) dans l'état raccordé ; et
dans laquelle le manchon (30) est en contact avec un deuxième côté (168) de la bride de tige (144) avec la vanne d'isolement (14) à l'état isolé.

4. Vanne d'isolement selon la revendication 3, dans laquelle le manchon (30) comprend une face de manchon conique et le deuxième côté de la bride de tige (144) comprend une face de bride conique, dans laquelle la face de manchon conique entre en contact et se scelle contre la face de bride conique.

5. Vanne d'isolement selon la revendication 3 ou la revendication 4, dans laquelle le piston (72) comprend une face de piston plate et le premier côté de la bride de tige (144) comprend une face de bride plate, dans laquelle la face de piston plate entre en contact et se scelle contre la face de bride plate avec la vanne d'isolement (14) à l'état raccordé.

6. Vanne d'isolement selon une quelconque des revendications 3 à 5, comprenant en outre :
un premier joint dynamique disposé sur le premier côté de la bride de tige (144), dans laquelle le piston (72) entre en contact avec le premier joint dynamique avec la soupape d'isolement (14) dans l'état raccordé ; et
un deuxième joint dynamique disposé sur le deuxième côté de la bride de tige (144), dans laquelle le manchon (30) entre en contact avec le deuxième joint dynamique avec la vanne d'isolement (14) dans l'état isolé.

7. Vanne d'isolement selon une quelconque des revendications 3 à 6, dans laquelle :
une interface entre le piston (72), le manchon (30) et la bride de tige (144) comprend un joint unique ;
un parmi le piston (72) et le manchon (30) s'étend sur une extrémité libre de la bride de tige (144) et vient en contact avec l'autre parmi le piston (72) et le manchon (30) ; et
le joint unique est formé entre le piston (72) et le manchon (30).

8. Vanne d'isolement selon une quelconque des revendications 3 à 7, dans laquelle :
une interface entre le piston (72), le manchon (30) et la bride de tige (144) comprend un double joint ;
le piston (72) dépasse en saillie sur un premier joint dynamique disposé sur le premier côté de la bride de tige (144) et vient en contact avec le premier côté de la bride de tige (144) ; et
le manchon (30) dépasse en saillie sur un deuxième joint dynamique disposé sur le deuxième côté de la bride de tige (144) et vient en contact avec le deuxième côté de la bride.

9. Vanne d'isolement selon une quelconque des revendications précédentes, dans laquelle le piston comprend :
une tête de piston (106) disposée dans un logement de piston (80) fixé au module de sortie (22), dans laquelle la tête de piston (106) divise le boîtier de piston (80) en une chambre humide et une chambre sèche ; et
une tige de piston (108) s'étendant depuis la tête de piston (106) et dans l'alésage de piston (104), la tige de piston (108) comprenant un alésage de réception configuré pour recevoir une deuxième extrémité de tige (32) disposée à l'opposé de la première extrémité de tige (32);
dans laquelle le module de sortie (22) comprend un orifice d'entrée de lavage (100a) relié fluidiquement à la chambre humide pour fournir un fluide de lavage à la chambre humide ; et
dans laquelle le module de sortie comprend un orifice de sortie de lavage (100b) relié fluidiquement à la chambre humide pour recevoir le fluide de lavage de la chambre humide et éjecter le fluide de lavage du module de sortie.

10. Vanne d'isolement selon la revendication 9, dans laquelle :
le piston (72) est entraîné par une course d'aspiration par le module d'entrée lorsque la vanne d'isolement (14) passe de l'état isolé à l'état raccordé et le piston est entraîné par une course de pompage lorsque la vanne d'isolement (14) passe de l'état raccordé à l'état isolé ;
le piston (72) aspire le fluide de lavage dans la chambre humide à travers l'orifice d'entrée de lavage pendant la course d'aspiration ; et
le piston (72) pompe le fluide de lavage de la chambre humide à travers l'orifice de sortie de lavage lorsque le piston se déplace pendant la course de pompage.

11. Vanne d'isolement selon une quelconque des revendications précédentes, comprenant en outre :
une chambre de sortie définie à l'intérieur de l'alésage de piston ;
un joint racleur disposé à l'intérieur de l'alésage de piston sur un côté de module d'entrée de la chambre de sortie ; et
un anneau de cartouche disposé à l'intérieur de l'alésage de piston entre le joint racleur et la chambre de sortie ;
dans laquelle le manchon traverse le joint racleur lorsque le manchon entre et sort de l'alésage du piston;
dans laquelle le piston est en contact avec le joint racleur avec la vanne d'isolement à l'état isolé et le manchon est en contact avec le joint racleur avec la vanne d'isolement à l'état raccordé ; et
dans laquelle l'anneau de cartouche définit une chambre de lavage à travers laquelle le piston pompe le fluide de lavage lorsque la vanne d'isolement passe de l'état raccordé à l'état isolé.

12. Vanne d'isolement selon une quelconque des revendications précédentes, dans laquelle aucun ressort n'est disposé dans un trajet d'écoulement s'étendant depuis l'orifice d'entrée du module d'entrée (20) à travers la tige (32), et vers l'orifice de sortie du module de sortie (22a).

13. Système de pulvérisation électrostatique comprenant :
un réservoir (12) configuré pour stocker une réserve d'un fluide de pulvérisation, dans lequel le réservoir (12) est raccordé au potentiel de terre ;
un applicateur (18) configuré pour être chargé et pour pulvériser le fluide de pulvérisation sur une surface ; et
la vanne d'isolement (14) selon une quelconque des revendications précédentes disposée entre le réservoir (12) et l'applicateur (18), dans laquelle le module d'entrée (20) est en communication fluidique avec le réservoir (12) et le module de sortie (22a) est raccordé fluidiquement à l'applicateur (18).

14. Procédé comprenant de :
entraîner une vanne d'isolement (14) dans une première direction à partir d'un état isolé, où un module d'entrée (20) est espacé d'un module de sortie (22a) de sorte qu'un espace (26a) soit formé entre eux, vers un premier état intermédiaire, où un contact est établi entre une tige (32) du module d'entrée (20) et un piston (72) du module de sortie (22a) ;
entraîner la vanne d'isolement (14) dans la première direction depuis le premier état intermédiaire vers un deuxième état intermédiaire, où un contact est établi entre un manchon (30) à travers lequel s'étend la tige (32) et le module de sortie (22a) de sorte que le manchon (30) soit renforcé contre le module de sortie (22a) pour empêcher un mouvement supplémentaire du manchon (30) dans la première direction ;
entraîner la vanne d'isolement (14) dans la première direction du deuxième état intermédiaire à un état raccordé, dans laquelle la tige (32) se décale par rapport au manchon (30) lorsque la vanne d'isolement (14) passe à l'état raccordé de sorte qu'un orifice de fluide à travers la tige (32) soit découvert à l'intérieur du module de sortie (22a) en ouvrant ainsi une voie d'écoulement à travers la tige (32) entre un orifice d'entrée du module d'entrée (20) et un orifice de sortie du module de sortie (22a) ; et entraîner la vanne d'isolement (14) de l'état raccordé au deuxième état intermédiaire, du deuxième état intermédiaire au premier état intermédiaire, et du premier état intermédiaire à l'état isolé.

15. Procédé selon la revendication 14, comprenant en outre de :
aspirer, avec le piston (72), le fluide de lavage dans une chambre humide du module de sortie (22a) lorsque la vanne d'isolement (14) passe du premier état intermédiaire à l'état raccordé ; et
entraîner, avec le piston (72), le fluide de lavage dans une chambre de lavage à travers laquelle passe une interface entre la tige (32), le manchon (30) et le piston (72) lorsque la soupape d'isolement (14) passe de l'état raccordé au premier état intermédiaire.
